# EUROPÄISCHE PATENTSCHRIFT

(11) **EP 3 670 578 B1**
(45) Veröffentlichungstag und Bekanntmachung des Hinweises auf die Patenterteilung: **19.05.2021**
(21) Anmeldenummer: 18214076.4
(22) Anmeldetag: 19.12.2018
(51) Int. Cl.: C08G 69/40, C08L 77/06, C08G 69/08

(54) **POLYAMIDFORMMASSE FÜR DAS EXTRUSIONSBLASFORMEN**
POLYAMIDE MOULDING MATERIAL FOR EXTRUSION BLOW MOLDING
MATIÈRE À MOULER POLYAMIDE POUR LE MOULAGE PAR EXTRUSION-SOUFFLAGE

(43) Veröffentlichungstag der Anmeldung: 24.06.2020
(73) Patentinhaber: EMS-CHEMIE AG, 7013 Domat/Ems (CH)
(72) Erfinder: HOFFMANN, Botho, 7013 Domat/Ems (CH); THOMAS, Oliver, 8604 Volketswil (CH); HATTA, Minoru, Ota-ku 144-0033 Tokyo (JP); FUJII, Takamasa, Ota-ku 144-0033 Tokyo (JP)
(74) Vertreter: Bremi, Tobias Hans

(56) Entgegenhaltungen:
- EP-A1- 1 884 356
- EP-A2- 1 518 901
- DE-A1- 19 745 701

## Beschreibung

### TECHNISCHES GEBIET

Die vorliegende Erfindung betrifft eine Polyamid-Formmasse, die für das Blasformverfahren geeignet ist, sowie Verfahren zur Herstellung derartiger Polyamid-Formmassen, Artikel hergestellt aus solchen Polyamid-Formmassen sowie Verwendungen von solchen Formmassen.

### STAND DER TECHNIK

Im Kraftfahrzeugbau werden oft Rohre und Schläuche aus Polyamid-Formmassen eingesetzt, weil Polyamide im Allgemeinen ein gutes Eigenschaftsprofil hinsichtlich mechanischer, thermischer und chemischer Beständigkeit aufweisen.

So beschreibt beispielsweise EP-A-2 325 260 eine Polyamid-Formmasse zur Herstellung von verschiedenen Leitungssystemen im Automobilbereich auf Basis teilaromatischer thermoplastischer Polyamide.

Für die Herstellung von Luftführungsteilen wird in der Regel das Extrusionsblasformen angewandt, das durch Varianten wie 3D-Blasformen oder Saugblasformen die Herstellung komplizierter Geometrien auf abfallarme und wirtschaftliche Art erlaubt. Die z.B. in EP-A-2 325 260 beschriebenen Formmassen sind auf Grund ihrer zu hohen Schmelzefestigkeit und vor allem wegen der schlechten Oberfläche des erhaltenen Bauteils nicht zum Extrusionsblasformen geeignet. Darüber hinaus haben die beschriebenen Formmassen eine zu hohe Steifigkeit, so dass flexible, insbesondere mit hochflexiblen Faltenbälgen ausgestattete Rohre nicht zugänglich sind. Nur Polyamid-Formmassen in einem bestimmten Schmelzefestigkeits- und E-Modulbereich kommen hierfür in Frage.

Ist die Schmelzefestigkeit zu gering, neigt ein vertikal extrudierter Schmelzeschlauch aus Polyamid unter dem Eigengewicht in der Regel zu schnellem Auslängen und Abtropfen bzw. Abreissen. Bei einer zu hohen Schmelzefestigkeit hingegen ist entweder die Ausformung eines Schlauchs nicht möglich, oder die erreichbare Oberflächengüte ist ungenügend.

Die in EP-A-2 687 554 beschriebenen Formmassen auf Basis von Polyamid 6 sind zwar blasformfähig, besitzen aber eine zu hohe Steifigkeit, so dass flexible Leitungen nicht hergestellt werden können.

EP-A-1 884 356 beschreibt einen Mehrschichtverbund in Form eines Hohlprofils, insbesondere einer Kraftstoffleitung, umfassend eine thermoplastische Aussenschicht und mindestens eine weitere Schicht, wobei die Aussenschicht aus einer Mischung auf Basis von 80 bis 20 Gewichtsteilen von wenigstens einem Polyamid und 20 bis 80 Gewichtsteilen von wenigstens einem Polyamid-Elastomeren, gebildet ist. Der Zusatz von Polyamid-Elastomer soll eine Erhöhung der Bruchdehnung (dort als Reissfestigkeit bezeichnet) bewirken. Bevorzugt enthält die Aussenschicht Polyamid 12, ein Polyamid-6-etheramid und als Verträglichkeitsvermittler einen Schlagzähmodifikator. Bei wechselnder Druck- und Zugscherbelastung sowie gleichzeitiger Wärmeeinwirkung kommt es bei derartigen Systemen jedoch zur Delaminierung.

US-A-20130172484 beansprucht eine Elastomermischung umfassend ein Polyetheresteramid, ein aliphatisches Polyamid und zwei verschiedene Ethylencopolymere. Die Elastomermischung soll eine verbesserte Resistenz gegen Verschleiss und ein verbessertes Rückstellverhalten aufweisen. Anwendungen sind insbesondere spritzgegossene Artikel im Sportbereich, insbesondere Schuhsohlen. Die Formmassen weisen für das Extrusionsblasformen eine zu niedrige Schmelzefestigkeit auf.

EP-B-3 126 447 betrifft ebenfalls eine Formmasse für die Herstellung von Sportartikeln, insbesondere Ski- oder Fussballschuhen. Die Formmasse umfasst neben der Hauptkomponente, gebildet durch ein teilkristallines Polyamid, ein Polyamid-Elastomer sowie weitere optionale Komponenten. Gearbeitet werden ausschliesslich Polyamide des Typs PA11, PA12 und PA1010 sowie Polyetheresteramide auf Basis PA11 und PA12. EP-A-1 482 011 betrifft eine thermoplastische Formmasse, die ein Gemisch aus einem thermoplastischen Polyamidharz als Hauptkomponente und einem Polyamidelastomer umfasst, wobei das Polyamidelastomer wenigstens 50 Gew.-% eines Polyetheramid-Elastomers enthält, das durch Polymerisation einer Triblockpolyetherdiaminverbindung mit einem Polyamid bildenden Monomers hergestellt wurde. Aufgrund des Triblockpolyetherdiamins besitzt die Formmasse eine verbesserte Hydrolysestabilität. In den Beispielen gearbeitet werden Mischungen aus PA12 und verschiedenen PA12-Triblockpolyether-Elastomeren, die 70 und 80 Gew.-% PA12 umfassen.

DE-A-10 2008 044 224 offenbart eine Formmasse, die mindestens 50 Gew.-% einer Mischung aus einem Polyamid und einem Polyamidelastomer, ausgewählt aus der Gruppe Polyetheresteramid und Polyetheramid, enthält. Die Formmasse dient zur Herstellung von Formteilen für den Kontakt mit einem überkritischen Medium, vorzugsweise zur Herstellung einer inneren Thermoplastschicht in einem Schlauch oder Rohr, in dem ein überkritisches Medium befördert wird.

### DARSTELLUNG DER ERFINDUNG

Aufgabe der vorliegenden Erfindung war es daher unter anderem, eine Polyamid-Formmasse zur Verfügung zu stellen, die blasformbar ist, eine hohe Flexibilität und gute Calciumchloridbeständigkeit besitzt sowie eine sehr gute Wärmeformbeständigkeit und eine hohe Beständigkeit bei dynamisch mechanischer Beanspruchung, insbesondere bei gleichzeitiger Wärmebelastung, aufweist.

Insbesondere war es Aufgabe der vorliegenden Erfindung, eine blasformbare Polyamid-Formmasse mit folgenden Merkmalen, einzeln oder vorzugsweise in Kombination, verfügbar zu machen:
- Blasformbar: Schmelzefestigkeit (SMF) von vorzugsweise im Bereich von 30 bis 70 Sekunden, bevorzugt im Bereich von 35 und 60 Sekunden, insbesondere von 40 bis 55 Sekunden, jeweils bestimmt gemäss der im experimentellen Teil beschriebenen Methode;
- hohe Flexibilität: Zug-E-Modul von vorzugsweise höchstens 800 MPa (ISO 527 (2012), trockener Zustand), bevorzugt im Bereich von 100 und 700 MPa, insbesondere von 200 bis 600 MPa;
- hohe Wärmealterungsbeständigkeit: Bruchspannung und Bruchdehnung (ISO 527 (2012), trockener Zustand) betragen nach Lagerung in Luft bei 150°C nach 1000 Stunden vorzugsweise noch mindestens 50% der Ausgangswerte;
- Beständigkeit bei dynamisch mechanischer Beanspruchung: Keine Delaminierung nach vorzugsweise 1.3 Mio. Zyklen mit wechselnder Druck- und Zugbelastung bei 150°C (gemäss Test, beschrieben im experimentellen Teil - Dynamischer Zug-Dehnungstest);
- Calciumchlorid-Beständigkeit: nach 20 Zyklen vorzugsweise keine Risse und keine Reduktion der Bruchspannung und der Bruchdehnung (gemäss Test, beschrieben im experimentellen Teil).

Die Erfindung betrifft somit eine Polyamid-Formmasse, die blasformbar ist, eine hohe Flexibilität, eine sehr gute Wärmealterungsbeständigkeit und eine verbesserte Beständigkeit gegen Delaminierung bei dynamisch mechanischer Beanspruchung aufweist.

Die Erfindung betrifft weiterhin aus der Formmasse hergestellte Formkörper, insbesondere durch Extrusionsblasformen hergestellte flexible Rohre oder Schläuche, die aufgrund der vorteilhaften Eigenschaften als Leitungen, insbesondere als Leitungen für Luftsysteme in Motorfahrzeugen verwendet werden können.

Konkret betrifft die vorliegende Erfindung eine thermoplastische Formmasse bestehend aus
(A) 51 bis 69.9 Gew.-% Polyamid-Elastomer,
   ausgewählt aus der Gruppe bestehend aus: Polyetheramid, Polyetheresteramid, oder eine Mischung davon,
   mit Hartsegmenten ausgewählt aus der Gruppe bestehend aus: PA6, PA66, PA6/66, PA610, PA612, PA614, PA616 oder eine Kombination davon, und
   mit Weichsegmenten in Form von OH- oder NH2-funktionalisierten Polyethersegmenten;
(B) 15 bis 38 Gew.-% Ethylen-α-Olefin-Copolymer,
   wobei das α-Olefin ausgewählt ist aus der Gruppe bestehend aus: But-1-en, Pent-1-en, Hex-1-en, Hept-1-en und Oct-1-en oder eine Kombination davon,
   und das Ethylen-α-Olefin-Copolymer mit wenigstens einem System ausgewählt aus der Gruppe bestehend aus: Acrylsäure, Methacrylsäure, Maleinsäureanhydrid, gepfropft ist,
   wobei der Pfropfgrad 0.8 bis 2.0 Gew.-% bezogen auf das gepfropfte Ethylen-α-Olefin-Copolymer beträgt;
(C) 3 bis 25 Gew.-% Polyamid, ausgewählt aus der Gruppe bestehend aus: PA6, PA66, PA6/66, PA610, PA612, PA614, PA616, PA6/610, PA66/610 oder Mischungen davon;
(D) 0.1 bis 2.0 Gew.-% Hitzestabilisatoren auf Basis von Kupfer und/oder Iodid, Lanthanoid-Verbindungen, organischen Stabilisatoren oder eine Mischung davon;
(E) 0 bis 5.0 Gew.-% Additive, verschieden von (A) bis (D);
   wobei die Summe (A) bis (E) 100 Gew.-% der gesamten Formmasse ergibt.

Zusätzlich gilt die Massgabe, dass die Summe aus (B) und (C) im Bereich von 30 bis 48 Gew.-% bezogen auf die gesamte Formmasse liegt. Vorzugsweise liegt die Summe aus (B) und (C) im Bereich von 32-45 Gew.-%, weiter bevorzugt im Bereich von 35-42 Gew.-% und insbesondere vorzugsweise im Bereich von 36-41 Gew.-%.

Eine solche Formmasse kann die oben beschriebenen positiven Eigenschaften, insbesondere Blasformbarkeit, hohe Flexibilität und gute Calciumchloridbeständigkeit sowie eine gute Wärmeformbeständigkeit und eine hohe Beständigkeit bei dynamisch mechanischer Beanspruchung, insbesondere bei gleichzeitiger Wärmebelastung, bereitstellen.

Was die **Komponente (A)** angeht, so ist die Formmasse gemäss einer ersten bevorzugten Ausführungsform dadurch gekennzeichnet, dass der Anteil der Komponente (A) in der gesamten Formmasse im Bereich von 52-67.8 Gew.-% liegt, vorzugsweise im Bereich von 53-64.6 Gew.-%, insbesondere vorzugsweise im Bereich von 56-63.5 Gew.-%.

Die Weichsegmente des Polyamid-Elastomers der Komponente (A) sind vorzugsweise ausgewählt aus der Gruppe bestehend aus: Polypropylengykol, Polytetrahydrofuran, oder eine Kombination davon.

Die Hartsegmente des Polyamid-Elastomers der Komponente (A) sind vorzugsweise ausgewählt aus der Gruppe bestehend aus: PA6, PA66, PA6/66 oder eine Kombination davon. Insbesondere vorzugsweise werden die Hartsegmente ausschliesslich durch PA6 gebildet.

Das Polyamid-Elastomer der Komponente (A) oder die Mischung der Polyamid-Elastomere der Komponente (A) verfügt vorzugsweise über einen Schmelzpunkt im Bereich von 180-250 °C, vorzugsweise im Bereich von 200-220 °C. Alternativ oder zusätzlich verfügt es über eine relative Viskosität, gemessen bei einer Konzentration von 0.5 g Polymer in 100 ml m-Kresol und einer Temperatur von 20 °C, im Bereich von 1.40 bis 2.40, vorzugsweise im Bereich von 1.50-2.20. Es handelt sich vorzugsweise beim Polyamid-Elastomer (A) um ein Polyamidetheramid (auch als Polyetheramid bezeichnet), Polyamidetheresteramid (auch als Polyetheresteramid bezeichnet) mit Hartsegmenten auf Basis von PA6, PA66 oder PA610 und Weichsegmenten auf Basis von Polypropylenglykol oder Polytetramethylenglykol, die OH- oder NH₂-Endgruppen tragen. Die Endgruppen können auch gemischt vorliegen.

Die Herstellung von Polyetheramiden und Polyetheresteramiden kann dabei durch CoKondensation von Polyamidblöcken wie z.B. PA 6 oder PA 66, welche Carboxylgruppen an beiden Kettenenden aufweisen, erfolgen, mit Polyetherblöcken, die auf Polyalkylenoxid-Polyolen basieren und die Aminogruppen oder Hydroxylgruppen an beiden Kettenenden aufweisen.

Bevorzugt für die Komponente (A) sind Polyamid-Elastomere aus den Untergruppen der Polyetheramide, der Polyetheresteramide einschliesslich der Blockcopolyetheresteretheramide. Diese Copolymere werden aus Polyetherblöcken mit reaktiven Endgruppen, welche für die Bildung von Ester- und/oder Amid-Bindungen geeignet sind, bevorzugt werden Hydroxy- und/oder Amino-Endgruppen, hergestellt. Das Polyetherrückgrat kann aus Polypropylenglykol (PPG), Polytetramethylglykol (PTMEG), Polybutylenglykol (PBG), Polyethylenglykol (PEG), Polyneopentylglykol (PNPG) und/oder deren Mischungen und/oder deren Copolymeren und/oder deren Blockpolymeren bestehen.

Beim Polyetherdiol bzw. dem Polyetherdiamin kann die Polyethereinheit beispielsweise auf 1.2-Ethandiol, 1.2-Propandiol, 1.3-Propandiol, 1.4-Butandiol oder 1.3-Butandiol basieren. Die Polyethereinheit kann auch gemischt aufgebaut sein, etwa mit statistischer oder blockweiser Verteilung der von den Diolen herrührenden Einheiten. Die zahlenmittlere Molmasse der Polyetherdiole bzw. Polyetherdiamine liegt bei 200 bis 5000 g/mol und vorzugsweise bei 400 bis 3000 g/mol; ihr Anteil am Polyetheresteramid bzw. Polyetheramid beträgt bevorzugt 5 bis 60 Gew.-% und besonders bevorzugt 20 bis 50 Gew.-%. Geeignete Polyetherdiamine sind durch Konversion der entsprechenden Polyetherdiole durch reduktive Aminierung oder Kupplung an Acrylnitril mit nachfolgender Hydrierung zugänglich; sie sind z. B. in Form der JEFFAMIN® D- oder ED-Typen oder der ELASTAMINE®-Typen bei der Huntsman Corp. oder in Form der Polyetheramin D-Reihe bei der BASF SE kommerziell erhältlich. In geringeren Mengen kann auch ein Polyethertriamin mit verwendet werden, z. B. ein JEFFAMIN® T-Typ. Was die **Komponente (B)** angeht, so ist die Formmasse gemäss einer weiteren bevorzugten Ausführungsform dadurch gekennzeichnet, dass der Anteil der Komponente (B) in der gesamten Formmasse im Bereich von 18-36 Gew.-% liegt, vorzugsweise im Bereich von 20-33 Gew.-% oder im Bereich von 25-33 Gew.-%.

Bevorzugt ist das gesamte Ethylen-α-Olefin-Copolymer der Komponente (B) ausschliesslich mit Maleinsäureanhydrid gepfropft ist.

Der Pfropfgrad des Ethylen-α-Olefin-Copolymer der Komponente (B) liegt vorzugsweise im Bereich von 0.9-1.6 Gew.-%, vorzugsweise im Bereich von 1.0-1.4 Gew.-% liegt.

Die Komponente (B) besteht bevorzugt ausschliesslich aus einem Ethylen-1-Buten-Copolymer, das mit Maleinsäureanhydrid mit einem Pfropfgrad im Bereich von 1.1-1.3 Gew.-%, bezogen auf das gepfropfte Ethylen-l-Buten-Copolymer, gepfropft ist. Weiterhin wird bevorzugt, wenn das Ethylen-α-Olefin-Copolymer der Komponente (B) oder die Mischung der Ethylen-α-Olefin-Copolymere der Komponente (B) einen Schmelzpunkt im Bereich von 40-80 °C, vorzugsweise im Bereich von 60-70 °C aufweist, und/oder einen Glasübergangspunkt von weniger als -20 °C, vorzugsweise von weniger als -30 °C, und/oder einen Schmelzflussindex (MFR) im Bereich von 0.5-5.0 g/10 min, vorzugsweise im Bereich von 0.8-2.0 g/10 min oder im Bereich von 1.0-1.5 g/10 min, jeweils bei 230°C und 2,16 kg gemessen nach ASTM D 1238.

Bei Komponente (B) handelt es sich mithin um Copolymere aus Ethylen (Ethen) und mindestens einem α-Olefin, wobei das α-Olefin ausgewählt ist aus der Gruppe bestehend aus But-1-en, Pent-1-en, Hex-1-en, Hept-1-en und Oct-1-en, wobei But-1-en besonders bevorzugt ist. Der Anteil an α-Olefin im Copolymer (B) beträgt bevorzugt 25 bis 60 Gew.-%, insbesondere bevorzugt 28 bis 55 Gew.-%. Die Ethylen-α-Olefin-Copolymere sind mit 0.8 bis 2.0 Gew.-%, bevorzugt 0.9 bis 1.6 Gew.-% Acrylsäure, Methacrylsäure oder Maleinsäureanhydrid gepfropft, wobei sich diese Gehaltsangabe auf das gepfropfte Ethylen-α-Olefin-Copolymer bezieht. Besonders bevorzugt wird ein mit Maleinsäureanhydrid gepfropftes Ethylen-Butylen-Copolymer, wobei der Gehalt an Maleinsäureanhydrid im Bereich von 0.9 bis 1.6 Gew.-% liegt.

Die Formmasse ist wie beansprucht vor allem frei von Ethylen-Propylen-Copolymeren, und zwar kommen solchen Systeme weder als Bestandteil der Komponente (B) noch als Teil anderer Komponenten vor.

Was die **Komponente (C)** angeht, so ist die Formmasse gemäss einer weiteren bevorzugten Ausführungsform dadurch gekennzeichnet, dass der Anteil der Komponente (C) in der gesamten Formmasse im Bereich von 5-22 Gew.-% liegt, vorzugsweise im Bereich von 7-18 Gew.-% oder im Bereich von 8-15 Gew.-%.

Das Polyamid der Komponente (C) ist vorzugsweise ausgewählt aus der Gruppe bestehend aus: PA6, PA66, PA6/66, PA610, PA612, PA614, PA616 insbesondere ausgewählt aus der Gruppe bestehend aus: PA6, PA66, PA6/66.

Gemäss einer besonders bevorzugten Ausführungsform ist die Komponente (C) ausschliesslich gebildet durch PA6.

Das Polyamid der Komponente (C) verfügt bevorzugterweise über eine relative Viskosität (ηᵣₑₗ) von 3.2-4.2 oder 3.4-4.2 (1.0 Gew.-% in Schwefelsäure, 20 °C, ISO 307 (2013)), vorzugsweise im Bereich von 3.5 - 4.1 oder 3.6-4.0.

Ganz spezifisch bevorzugt wird es, wenn das Polyamid der Komponente (C) PA6 enthält oder ausschliesslich aus PA6 besteht, wobei dieses PA6 eine relative Viskosität von 3.4-4.2 (1.0 Gew.-% in Schwefelsäure, 20 °C, ISO 307 (2013)), vorzugsweise im Bereich von 3.5-4.1 aufweist.

Komponente (C) ist mithin ein aliphatisches Polyamid bevorzugt ausgewählt aus der Gruppe bestehend aus PA6, PA66, PA6/66, PA610, PA6/610, PA66/610 oder Mischungen davon. Bevorzugt werden die Polyamide PA6 und PA6/66, besonders bevorzugt wird PA6 verwendet.

Damit die Schmelzefestigkeit im für das Extrusionsblasformverfahren richtigen Bereich liegt, werden vorzugsweise Polyamide (C) mit einer relativen Viskosität von 3.2 bis 4.2 (Schwefelsäure, 1%), bevorzugt 3.5 bis 4.1 eingesetzt. Besonders bevorzugt wird Polyamid 6 mit einer relativen Viskosität von 3.5 bis 4.1.

Was die **Komponente (D)** angeht, so ist die Formmasse gemäss einer weiteren bevorzugten Ausführungsform dadurch gekennzeichnet, dass der Anteil der Komponente (D) in der gesamten Formmasse im Bereich von 0.2-2.0 Gew.-% liegt, vorzugsweise im Bereich von 0.25-2.0 Gew.-% oder 0.3-2.0 Gew.-% und insbesondere bevorzugt im Bereich von 0.3 bis 1.5.

Die Hitzestabilisatoren der Komponente (D) Systeme enthalten oder bestehen vorzugsweise aus Systemen ausgewählt aus der Gruppe bestehend aus: Kupfer(I)iodid, Kaliumiodid, organischen Stabilisatoren, oder eine Mischung davon, wobei vorzugsweise die organischen Stabilisatoren ausgewählt sind aus der Gruppe bestehend aus: Phenole, insbesondere vorzugsweise in Form von Pentaerythritol tetrakis(3-(3,5-di-tert-butyl-4-hydroxyphenyl)propionat), Tetrakismethylene (3,5-di-t-butyl-4-hydroxyhydrocinnamat)methan oder einer Mischung dieser Systeme.

Die Hitzestabilisatoren der Komponente (D) enthalten oder werden ausschliesslich gebildet vorzugsweise durch eine Mischung aus Kupfer(I)iodid, Kaliumiodid, wobei vorzugsweise der Anteil an Kupfer(I)iodid im Bereich von 0.02-0.1 Gew.-% liegt und der Anteil von Kaliumiodid im Bereich von 0.2-0.6 Gew.-%, jeweils bezogen auf die gesamte Formmasse.

Die Hitzestabilisatoren der Komponente (D) enthalten oder werden ausschliesslich gebildet vorzugsweise durch eine Mischung aus Pentaerythritol tetrakis(3-(3,5-di-tert-butyl-4-hydroxyphenyl)propionat) und Tetrakismethylene (3,5-di-t-butyl-4-hydroxyhydrocinnamat)methan, vorzugsweise in einem Gewichtsverhältnis von 1:1-3:1, vorzugsweise im Bereich von 2:1-8:3 oder im Bereich von 7:3.

Die Hitzestabilisatoren der Komponente (D) enthalten oder werden ausschliesslich gebildet vorzugsweise aus Systemen ausgewählt aus der Gruppe bestehend aus: Kupfer(I)iodid, Kaliumiodid, Lanthanacetat, Lanthanhydroxid, Lanthanoxid, Ceracetat, Certetrahydroxid, und Ceroxid, oder Mischungen davon.

Die erfindungsgemässe Formmasse enthält mithin Hitzestabilisatoren (D) (oder synonym Wärmestabilisatoren) in einer Konzentration von vorzugsweise 0.2 bis 2 Gew.-%, bevorzugt von 0.30 bis 1.50 Gew.-%.

In einer bevorzugten Ausführungsform sind die Wärmestabilisatoren ausgewählt aus der Gruppe bestehend aus
- Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, CuI, CuCN und Cu2O, sowie die zweiwertigen Kupferverbindungen CuCl2, CuSO4, CuO, Kupfer(II)acetat oder Kupfer(II)stearat. Sofern eine Kupferverbindung verwendet wird, beträgt vorzugsweise die Menge an Kupfer 0.02 bis 0.5, insbesondere 0.03 bis 0.35 und besonders bevorzugt 0.05 bis 0.25 Gew.-%, bezogen auf die Summe der anderen Komponenten, d.h. bezogen auf die gesamte Polyamidformmasse.
   Die Kupferverbindungen sind an sich handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise gleicher chemischer Natur wie die Polyamide (A) oder (B), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie Nal, KI, NaBr, KBr, eingesetzt, wobei das molare Verhältnis von Metallhalogenid zu Kupferhalogenid 0.5 bis 20, bevorzugt 1 bis 10 und besonders bevorzugt 3 bis 8 beträgt.
- Verbindungen der Lanthanoide ausgewählt aus der Gruppe bestehend aus Fluoriden, Chloriden, Bromiden, Iodiden, Oxidhalogeniden, Sulfaten, Nitraten, Phosphaten, Chromaten, Perchloraten, Carboxylaten der Mono- und Dicarbonasäuren mit 1 bis 20 Kohlenstoffatomen, insbesondere Acetaten, Formiaten, Propionaten, Oxalaten, den Monochalkogeniden von Schwefel, Selen und Tellur, Carbonaten, Hydroxiden, Oxiden, Trifluoromethansulfonaten, Acetylacetonaten, Alkoholaten, 2-Ethylhexanoaten der Lanthanoide Lanthan, Cer, Praeseodym, Neodym, Promethium, Samarium, Europium, Gadolinium, Terbium, Dysprosium, Holmium, Erbium, Thulium, Ytterbium und Lutetium sowie Hydraten der genannten Salze sowie Mischungen der genannten Verbindungen. Besonders bevorzugt sind die Verbindungen von Lanthan und Cer, insbesondere bevorzugt ist hier die Verwendung von Lanthanacetat, Lanthanhydroxid, Lanthanoxid, Ceracetat, Certetrahydroxid und Ceroxid.

- Stabilisatoren auf Basis sekundärer aromatischer Amine, wobei diese Stabilisatoren vorzugsweise in einer Menge von 0.2 bis 2.0, bevorzugt von 0.2 bis 1.5 Gew.-% vorliegen,
- Stabilisatoren auf Basis sterisch gehinderter Phenole, wobei diese Stabilisatoren vorzugsweise in einer Menge von 0.1 bis 1.5, bevorzugt von 0.2 bis 1.0 Gew.-% vorliegen, und
- Phosphiten und Phosphoniten, sowie
- Mischungen der vorstehend genannten Stabilisatoren.

Besonders bevorzugte Beispiele für erfindungsgemäss einsetzbare Stabilisatoren auf Basis sekundärer aromatischer Amine sind Addukte aus Phenylendiamin mit Aceton (Naugard A), Addukte aus Phenylendiamin mit Linolen, Naugard 445, N,N'-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäss einsetzbare Stabilisatoren auf Basis sterisch gehinderter Phenole sind N,N'-Hexamethylen-bis-3-(3,5-di-tert-butyl-4-hydroxy¬phenyl)-propionamid, Bis-(3,3-bis-(4'-hydroxy-3'-tert-butylphenyl)-butan¬säure)-glykolester, 2,1'-Thioethylbis-(3-(3,5-di.tert-butyl-4-hydroxy¬phenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkyl¬phosphit, Phenyldialkylphosphit, Tris(nonylphenyl)phosphit, Trilaurylphosphit, Trioctadecylphosphit, Distearylphentaerythritoldiphosphit, Tris(2,4-di-tert-butyl¬phenyl)phosphit, Diisodecylpenta-erythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butyl¬phenyl))¬pentaerythritol-diphosphit, Tristearylsorbitoltriphosphit, Tetrakis¬(2,4-di-tert-butylphenyl)-4,4'-biphenylen-diphosphonit, 6-Isooctyloxy-2,4,8,10-tetra-tert-butyl-12H-dibenz-[d,g]-1,3,2-dioxa-phosphocin, 6-Fluoro-2,4,8,10-tetra-tert-butyl-12-methyl-dibenz[d,g]-1,3,2-dioxaphosphocin, Bis¬(2,4-di-tert-butyl-6-methylphenyl)methylphosphit und Bis(2,4-di-tert-butyl-6-methyl¬phenyl)- ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit.

Bevorzugt wird z.B. eine Wärmestabilisierung ausschliesslich auf Basis von CuI und KI, wobei vorzugsweise 0.2 - 0.6 Gew.-% Kaliumiodid und 0.02 bis 0.10 Gew.-% Kupfer(I)iodid eingesetzt werden. Neben dem Zusatz von Kupfer oder Kupferverbindungen können noch weitere Übergangsmetallverbindungen, insbesondere Metallsalze oder Metalloxide der Gruppe VB, VIB, VIIB oder VIIIB des Periodensystems verwendet werden. Darüber hinaus werden der erfindungsgemässen Formmasse bevorzugt Übergangsmetalle der Gruppe VB, VIB, VIIB oder VIIIB des Periodensystems, wie z.B. Eisen- oder Stahlpulver, zugesetzt. Besonders bevorzugt ist eine Kombination von anorganischer und organischer Stabilisierung, insbesondere auf Basis von CuI und KI sowie Irganox 1010 und Anox 20, wobei insbesondere 0.2 - 0.6 Gew.% Kaliumiodid und 0.02 bis 0.10 Gew.-% Kupfer(I)iodid sowie 0.5 bis 1.5 Gew.-% Irganox 1010 oder einer Mischung aus Irganox 1010 und Anox 20 (7:3) eingesetzt werden.

Generell gesprochen handelt es sich also gemäss einer weiteren bevorzugten Ausführungsform bei der Komponente (D), welche in der Formmasse in einem Anteil im Bereich von 0.2 bis 2 Gew.-%, bevorzugt im Bereich von 0.30 bis 1.50 Gew.-% vorliegt, um ein System ausgewählt ist aus der folgenden Gruppe: Verbindungen des ein- oder zweiwertigen Kupfers, Stabilisatoren auf Basis sekundärer aromatischer Amine, Stabilisatoren auf Basis sterisch gehinderter Phenole, Phosphite, Phosphonite, sowie Mischungen davon.

Bevorzugte organische Stabilisatoren sind Phenol- und/oder Phosphit-Verbindungen, wie z.B. Irganox 245, Irganox 1010, Irganox 1098, Hostanox PAR 24, Anox 20 oder Irgafos 168. Besonders bevorzugt wird Irganox 1010 in einer Konzentration von 0.5 bis 1.0 Gew.-%, insbesondere in Kombination mit 0.2 bis 0.4 Gew.-% Anox 20.

Was die **Komponente (E)** angeht, so ist die Formmasse gemäss einer weiteren bevorzugten Ausführungsform dadurch gekennzeichnet, dass der Anteil der Komponente (E) in der gesamten Formmasse im Bereich von 0-4.0 Gew.-% liegt, vorzugsweise im Bereich von 0.1-3.0 Gew.-% oder im Bereich von 0.2-2.5 Gew-%.

Die Additive der Komponente (E) Systeme sind vorzugsweise ausgewählt aus der folgenden Gruppe: Kristallisations-Beschleuniger oder -Verzögerer, Fliesshilfsmittel, Gleitmittel, Entformungsmittel, Pigmente, Farbstoff- und Markierungsstoffe, Verarbeitungshilfsmittel, Antistatika, Russ, Graphit, Kohlenstoffnanoröhrchen, Residuen aus Polymerisationsverfahren wie Katalysatoren, Salze und deren Derivate, Antioxidantien, Antiozonantien, Lichtschutzmitteln, UV-Stabilisatoren, UV-Absorbern oder UV-Blockern, IR-Absorbern, NIR-Absorbern, Antiblockmitteln, Nukleierungsmitteln, Kettenreglern, Entschäumern, kettenverlängernden Additiven, Leitfähigkeitsadditiven, Trennmitteln, organischen Pigmenten, Russ, Graphit, Graphen, photochromen Agenzien, Entformungsmitteln, optischen Aufhellern, sowie Mischungen und Kombinationen hieraus. Bevorzugt sind die Additive der Komponente (E) Systeme ausgewählt aus der folgenden Gruppe: Entformunghilfsmittel, Lichtstabilisatoren, Pigmente, Farbstoffe, Kettenverlängerer. Letztere vorzugsweise als acrylsäuremodifizierte Polyolefine mit einem Pfropfgrad von über 4 Gew.-% und/oder Kombination eines Polycarbonats mit einem säureterminierten Polyamid, wobei chemisch modifizierte Polyolefine insbesondere ausgewählt sind als mit Acrylsäure gepfropftes Polyethylen, vorzugsweise mit einem Pfropfgrad im Bereich von 5-7 Gew.-%, bezogen auf das gepfropfte Polyethylen, wobei es sich beim Polyethylen vorzugsweise um ein HDPE handelt.

Die Mischung der Polyamidformmasse enthält mithin optional in Form von Komponente (E) auch weitere Hilfsstoffe und/oder Additive, verschieden von den anderen Komponenten (A) bis (D), in einem Anteil von höchstens 5.0 Gew.-%.

Gemäss einer bevorzugten Ausführungsform liegt die Komponente (E) in einem Anteil, bezogen auf die gesamte Polyamidformmasse, im Bereich 0.1-4.0 Gew.-%, insbesondere bevorzugt im Bereich von 0.5-3.5 Gew.-%, vor.

Bevorzugt als Komponente (E) werden wie gesagt kettenverlängernde Additive (Kettenverlängerer), welche bei der thermoplastischen Verarbeitung zu einem Molekulargewichtsaufbau durch Kettenverlängerung von Polyamid-, Polyetheramid- oder Polyetheresteramid-molekülen führt. Bevorzugte Kettenverlängerer sind acrylsäuremodifizierte Polyethylene mit einem Pfropfgrad von über 4 Gew.-% sowie die Kombination eines Polycarbonats mit einem säureterminierten Polyamid.

Ein solcher Kettenverlängerer ist beispielsweise unter der Bezeichnung Brüggolen® M 1251 von der Firma Brüggemann Chemical (Deutschland) im Handel erhältlich, wobei es sich um ein Masterbatch aus einem niedrigviskosen Polycarbonat in einem säureterminierten Polyamid 6 handelt.

Eine andere bevorzugte Variante eines Kettenverlängerers ist ein acrylsäuremodifiziertes Polyethylen hoher Dichte, vorzugsweise mit einem Pfropfgrad im Bereich von 4.5 bis 7 %, erhältlich z.B. von der Firma Chemtura unter dem Handelsnamen Polybond® 1009, welches mit 6 Gew.-% Arcylsäure gepfropft ist.

Weitere bevorzugte Kettenverlängerer sind aromatische Polycarbodiimide, welche z.B. von der Firma Rhein-Chemie (Deutschland) unter dem Namen Stabaxol® P vertrieben werden. Andere bevorzugte Kettenverlängerer sind acrylsäuremodifizierte lineare Polyethylene niedriger Dichte, wie z.B. das von der Firma OKA-Tec angebotene Okabest® 2400. Weitere bevorzugte Kettenverlängerer sind 1,1'-Carbonyl-biscaprolactamate, welche z.B. von der Firma DSM unter dem Namen Allinco® CBC vertrieben werden, sowie Bisoxazoline, wie z.B. 1,4-Phenylen-bis-(2-oxazolin).

Die Kettenverlängerer der vorliegenden Erfindung werden in 0.5 bis 2.5 Gewichtsprozent, bevorzugt in 0.7 bis 2.2 Gewichtsprozent und besonders bevorzugt in 1 bis 2 Gewichtsprozent bezogen auf 100 Gewichtsprozent der Polyamidformmasse, welche sich aus den oben beschrieben Komponenten (A) bis (E) zusammensetzt, eingesetzt.

In einer bevorzugten Ausführungsform besteht die thermoplastische Formmasse aus
(A) 52 bis 67.8 Gew.-% Polyamid-Elastomer,
   ausgewählt aus der Gruppe bestehend aus: Polyetheramid, Polyetheresteramid, oder eine Mischung davon,
   mit Hartsegmenten ausgewählt aus der Gruppe bestehend aus: PA6, PA66, PA6/66, PA610, PA612, PA616 oder eine Kombination davon, und
   mit Weichsegmenten in Form von OH- oder NH₂-funktionalisierten Polyethersegmenten Polypropylenglykol (PPG) und Polytetrahydrofuran (PTHF);
(B) 18 bis 36 Gew.-% Ethylen-α-Olefin-Copolymer,
   wobei das α-Olefin ausgewählt ist aus der Gruppe bestehend aus: But-1-en und Oct-1-en oder eine Kombination davon,
   und das Ethylen-α-Olefin-Copolymer mit Maleinsäureanhydrid, gepfropft ist, wobei der Pfropfgrad 0.9 bis 1.6 Gew.-% bezogen auf das gepfropfte Ethylen-α-Olefin-Copolymer beträgt;
(C) 5 bis 22 Gew.-% Polyamid, ausgewählt aus der Gruppe bestehend aus: PA6, PA66, PA6/66, PA610, PA612, PA616 oder Mischungen davon;
(D) 0.2 bis 2.0 Gew.-% Hitzestabilisatoren auf Basis von Kupfer und/oder Iodid, Lanthanoid-Verbindungen, organischen Stabilisatoren oder eine Mischung davon;
(E) 0 bis 4.0 Gew.-% Additive, verschieden von (A) bis (D);
wobei die Summe (A) bis (E) 100 Gew.-% der gesamten Formmasse ergibt.

Zusätzlich gilt die Massgabe, dass die Summe aus (B) und (C) im Bereich von 32 bis 45 Gew.-% bezogen auf die gesamte Formmasse liegt.

In einer weiteren bevorzugten Ausführungsform besteht die thermoplastische Formmasse aus
(A) 53 bis 64.6 Gew.-% Polyamid-Elastomer,
   ausgewählt aus der Gruppe bestehend aus: Polyetheramid, Polyetheresteramid, oder eine Mischung davon,
   mit Hartsegmenten ausgewählt aus der Gruppe bestehend aus: PA6, PA66, PA6/66 oder eine Kombination davon, und
   mit Weichsegmenten in Form von OH- oder NH₂-funktionalisierten Polyethersegmenten Polypropylenglykol (PPG) und Polytetrahydrofuran (PTHF);
(B) 20 bis 33 Gew.-% Ethylen-α-Olefin-Copolymer,
   wobei das α-Olefin ausgewählt ist aus der Gruppe bestehend aus: But-1-en und Oct-1-en oder eine Kombination davon,
   und das Ethylen-α-Olefin-Copolymer mit Maleinsäureanhydrid, gepfropft ist, wobei der Pfropfgrad 0.9 bis 1.6 Gew.-% bezogen auf das gepfropfte Ethylen-α-Olefin-Copolymer beträgt;
(C) 7 bis 18 Gew.-% Polyamid, ausgewählt aus der Gruppe bestehend aus: PA6, PA66, PA6/66, PA610, PA612, PA616 oder Mischungen davon;
(D) 0.3 bis 2.0 Gew.-% Hitzestabilisatoren auf Basis von Kupfer und/oder Iodid, Lanthanoid-Verbindungen, organischen Stabilisatoren oder eine Mischung davon;
(E) 0.1 bis 3.0 Gew.-% Additive, verschieden von (A) bis (D);
wobei die Summe (A) bis (E) 100 Gew.-% der gesamten Formmasse ergibt.

Zusätzlich gilt die Massgabe, dass die Summe aus (B) und (C) im Bereich von 35 bis 42 Gew.-% bezogen auf die gesamte Formmasse liegt.

Eine erfindungsgemässe Formmasse verfügt vorzugsweise über eine Schmelzefestigkeit im Bereich von 30-70 Sekunden oder im Bereich von 35-60 Sekunden, vorzugsweise im Bereich von 40-55 Sekunden.

Die Formmasse verfügt weiterhin vorzugsweise über ein Zug-E-Modul von höchstens 800 MPa (ISO 527 (2012), trockener Zustand), vorzugsweise im Bereich von 100-700 MPa, insbesondere vorzugsweise im Bereich von 200-600 MPa.

Die Formmasse zeigt vorzugsweise bei dynamisch mechanischer Beanspruchung nach wenigstens 1 Million Zyklen, insbesondere 1.3 Mio Zyklen, mit wechselnder Druck- und Zugbelastung bei 150 °C keine Delaminierung.

Weiterhin betrifft die vorliegende Erfindung ein Verfahren zur Herstellung einer Formmasse wie oben beschrieben, welches dadurch gekennzeichnet ist, dass die Komponenten (A)-(E) gemeinsam in gegebenenfalls aufgeschmolzener Form in eine Mischvorrichtung, vorzugsweise in Form einer Extrusionsvorrichtung mit vorzugsweise mehreren Wellen, zudosiert werden.

Ebenfalls betrifft die vorliegende Erfindung die Verwendung einer Formmasse wie oben beschrieben in einem Spritzgiessverfahren, Extrusionsverfahren oder einem Coextrusionsverfahren, vorzugsweise in einem Blasformverfahren, vorzugsweise einem Extrusionsblasformverfahren oder einem Streckblasformverfahren, einschliesslich 3D-Blasformen, Coextrusionsblasformen, Coextrusions-3D-Blasformen, sequentielle Coextrusion, Coextrusions-Saugblasformen, und sequentielles Blasformen, wobei vorzugsweise ein Vorformling, welcher in einem vorangeschalteten Arbeitsschritt durch konventionelles Spritzgiessen hergestellt wird, in einem ersten Prozessschritt aufgeheizt wird, vorzugsweise mit einem Infrarot-Strahler, und nach dem Erwärmen der Vorformling in ein Werkzeug gefahren wird oder Heizer aus dem Werkzeug gefahren werden, durch das Schliessen des Werkzeugs am Flaschenhals ggf. eine Längsverstreckung erfolgt, wodurch der Vorformling axial gehalten wird und dann ein Gas in den Vorformling eingeleitet wird, der sich unter der Druckbeanspruchung ausdehnt und dabei die Werkzeugkontur abbildet. Die erfindungsgemässen Formmassen, die zum Blasformen geeignet sind, können mit verschiedenen Verfahren wie z.B. Spritzgiessen, Extrusion und Coextrusion verarbeitet werden. Bevorzugte Verarbeitungsverfahren sind Extrusionsblasformen, 3D-Blasformen, Coextrusionsblasformen, Coextrusions-3D-Blasformen, sequentielle Coextrusion und sequentielles Blasformen. Aber auch Spritzgiessen, Spritzgiessschweissen, Tiefziehen, Coextrusions-Saugblasformen, Herstellung von Hart-Weich-Verbunden, GIT (Gasinnendrucktechnik) und WIT (Wasserinnendrucktechnik) und vergleichbaren Verarbeitungsverfahren sind möglich.

Generell eignen sich die erfindungsgemässen Polyamid-Formmassen für alle Anwendungen, bei denen Blasformbarkeit, Wärmealterungsbeständigkeit und eine hohe Beständigkeit im Hinblick auf mechanisch-dynamische Lastwechsel gefordert wird. Zudem betrifft die vorliegende Erfindung Formkörper aus einer Formmasse wie oben beschrieben, vorzugsweise in Form eines Rohres oder Behälters, insbesondere vorzugsweise in Form eines Hohlkörpers oder einer Leitung, vorzugsweise für die Verwendung im Kraftfahrzeugbereich, einschliesslich Rohre oder Behälter wie Ladeluftrohre für ein Automobil, fluidführende Mono- oder Mehrschichtleitungen, die glatt oder gewellt sein können, wie Kraftstoffleitungen, Hydraulikleitungen, Bremsleitungen, Kupplungsleitungen oder Kühlflüssigkeitsleitungen, Bremsflüssigkeitsbehälter oder Kraftstoffbehälter, wobei der Formkörper zusätzlich weitere Schichten aus anderen thermoplastischen Materialien aufweisen kann, wobei vorzugsweise eine solche weitere Schicht aus einem System ausgewählt aus der folgenden Gruppe besteht: PA 612, PA 610, PA11, PA 12, PA 1010, PA 1012, PA616, PA 6, PA 66, PA 10T/612, PA 9T/MT (M = 2-Methyloctan-1,8-diamin), PA 46 oder Mischungen davon. Ein- oder mehrschichtige Hohlkörper aus der erfindungsgemässen Formmasse lassen sich prinzipiell nach dem Extrusions-Blasverfahren bzw. den diesem Verfahren zugeordneten Sonderverfahren herstellen. Die Palette an hergestellten Produkten umfasst dabei neben den gängigen Hohlkörpern im Verpackungsbereich wie Flaschen, Kanister, Fässer etc., eine Vielzahl technischer Formteile wie z.B. Rohre und Rohrleitungssysteme, welche für Fluide wie z.B. gasförmige Medien eingesetzt werden können. Mit den 3D-Verfahren (3D-Schlauchmanipulation, 3D-Saug-Blasverfahren) lassen sich jede erdenkliche Form von Rohren und Schläuchen für druckführende Medien und drucklose Medien herstellen.

Die erfindungsgemässe Polyamid-Formmasse ist blasformbar und weist bei der angewandten Verarbeitungstemperatur eine Schmelzefestigkeit auf, die bevorzugt im Bereich von 30 bis 70 Sekunden, insbesondere bevorzugt im Bereich von 35 bis 60 Sekunden und besonders bevorzugt im Bereich von 40 bis 55 Sekunden liegt.

Das bevorzugte Verfahren zur Herstellung von Rohrteilen aus einer erfindungsgemässen Polyamid-Formmasse besteht darin, dass eine Polyamid-Formmasse der beschriebenen Zusammensetzung extrusionsblasgeformt wird.

Beim Verfahren des Extrusionsblasformens werden vorzugsweise die Varianten 3D-Blasformen oder Saugblasformen angewandt. Eine Beschreibung des Extrusionsblasformprozesses mit allen gängigen Varianten, angefangen beim konventionellen Blasformen über verschiedene 3D-Technologien bis zum sequentiellen Blasformen und dem Coextrusionsblasformen, findet sich zum Beispiel im Technischen Datenblatt "Verarbeitung von Grilamid und Grilon durch Extrusionsblasformen" der Firma EMS aus dem Februar 1998.

Die bevorzugte Verwendung der erfindungsgemässen Formmassen, daraus hergestellter Formkörper oder eines Verfahrens zur Herstellung von Formkörpern aus solchen Formmassen besteht in der Verwendung für Leitungen für Luftsysteme bei Motorfahrzeugen. Insbesondere ist bei dieser Verwendung die Leitung für Luftsysteme bei einem Ottomotor oder Dieselmotor eingebaut, und dabei besonders bevorzugt bei Motoren mit Abgas-Turbolader.

Aus erfindungsgemässen Polyamid-Formmassen können z.B. die Reinluftleitung, das Ladeluft-Vorlaufrohr und/oder das Ladeluft-Rücklaufrohr gebildet sein. Die erfindungsgemässe Polyamid-Formmasse bzw. eine daraus hergestellte Leitung kommt aber auch in Betracht für die Kurbelwellenentlüftungsleitung oder eventuell sogar als Abgasrückführungsleitung im Bereich nach dem Abgasrückführungskühler.

Die Luftführungsleitungen sind normalerweise einschichtig ausgebildet. Sie könnten aber auch eine oder mehrere zusätzliche Schichten umfassen. Weitere Schichten können prinzipiell aus allen auf der beanspruchten Formmasse haftenden Polyamiden bestehen, wobei PA616, PA 612, PA 610, PA 11, PA 12, PA 1010, PA 1012, PA 6, PA 66, PA 10T/612, PA 9T/MT (M = 2-Methyloctan-1,8-diamin) und PA 46 bevorzugt sind. Erfindungsgemässe Formkörper sind beispielsweise: Kühlerrohre, Kühlerwasserkästen, Ausgleichsbehälter und andere Medien führende Rohre und Behälter, Luftführungsteile, die insbesondere bei höherer Temperatur eingesetzt werden können, wie Rohre in Turboladern.

Weiterhin können aus der erfindungsgemässen Formmasse ein- oder mehrschichtige Hohlkörper hergestellt werden, wie z.B. Rohre oder Behälter. Darunter fallen beispielsweise Ladeluftrohre für ein Automobil, fluidführende Mono- oder Mehrschichtleitungen, die glatt oder gewellt sein können, etwa Kraftstoffleitungen, Hydraulikleitungen, Bremsleitungen, Kupplungsleitungen oder Kühlflüssigkeitsleitungen, Bremsflüssigkeitsbehälter oder Kraftstoffbehälter, vorzugsweise hergestellt durch Spritzguss, Extrusion oder Blasformen.

Insbesondere beinhalten die Formkörper fluidführende Teile oder Leitungen (Gase und/oder Flüssigkeiten) oder Teile, die beim bestimmungsgemässen Gebrauch mit Fluiden in Berührung kommen, wobei das Fluid insbesondere Wasser, Glykol, Öl, Kraftstoffe (Benzin, Diesel), Alkohole (z.B. Methanol, Ethanol, Isopropanol), Luft oder Abgase, oder Mischungen davon, ist. Bei den Formteilen handelt es sich bevorzugt um Leitungen, Faltenbälgen, Stutzen, Konnektoren oder Fittings und Behältern, die auch antistatisch ausgerüstet sein können, für den Automobilbereich. Konkret seien glatte und gewellte Rohre genannt, Rohrabschnitte, Stutzen (Ansaug-, Entlüftungs-, Einfüll-, Ablass-), Fittings zum Verbinden von Schläuchen, Wellrohren und medienführenden Leitungen, Bestandteil von Mehrschichtleitungen (Aussen-, Zwischen-, Innenschicht), Behälter, Teile von Behältern (z.B. Verschlüsse), einzelne Schichten von Mehrschichtbehältern, Abdeckungen oder Kurbelgehäuseteile, wie z.B. Entlüftungen für Kurbelwellengehäuse, im Automobilbereich, Hydraulikleitungen, Bremsleitungen, Bremsflüssigkeitsbehälter, Kühlflüssigkeitsleitungen.

Weitere Ausführungsformen sind in den abhängigen Ansprüchen angegeben.

### BESCHREIBUNG BEVORZUGTER AUSFÜHRUNGSFORMEN

Bevorzugte Ausführungsformen der Erfindung werden im Folgenden anhand der Ausführungsbeispiele beschrieben.

### Herstellung der Formmassen:

Die in den Tabellen 1 und 2 bezeichneten Formmassen wurden auf einem Zweiwellenextruder der Firma Werner u. Pfleiderer Typ ZSK25 bei Temperaturen zwischen 240 und 300°C, einer Schneckendrehzahl von 200 Upm und einem Durchsatz von 10 kg/h hergestellt. Dazu wurden die aufgeführten Einsatzstoffe in den Einzug des Extruders dosiert. Die Schmelze wurde als Strang aus einer Düse mit 3 mm Durchmesser abgezogen und nach Wasserkühlung granuliert. Das Granulat wurde 24 Stunden bei 80°C im Vakuum von 30 mbar getrocknet.

### Herstellung der Prüfkörper:

Die Compounds wurden mit einer Spritzgussmaschine Arburg Allrounder 320-210-750 zu Probekörpern bei definierten Zylindertemperaturen der Zonen 1 bis 4 von 240 bis 280 °C und einer Werkzeugtemperatur von 100 °C verspritzt.

**Tabelle 1: Erfindungsgemässe Beispiele B1 bis B5**

| **Komponenten** | **Einheit** | **B1** | **B2** | **B3** | **B4** | **B5** |
|---|---|---|---|---|---|---|
| PA6-Polyether-Blockcopolyamid | Gew.-% | 58.6 | 58.6 | 57.6 | 56.6 | 58.6 |
| Tafmer MH5020C | Gew.-% | 30.0 | | 30.0 | 30.0 | 20.0 |
| Tafmer MH7020 | Gew.-% | | 30.0 | | | |
| PA6 | Gew.-% | 10.0 | 10.0 | 10.0 | 10.0 | 20.0 |
| Kaliumiodid | Gew.-% | 0.35 | 0.35 | 0.35 | 0.35 | 0.35 |
| Kupfer(I)iodid | Gew.-% | 0.05 | 0.05 | 0.05 | 0.05 | 0.05 |
| Irganox/Anox (7:3) | Gew.-% | 1.00 | 1.00 | 1.00 | 1.00 | 1.00 |
| Euthylenschwarz | Gew.-% | 1.00 | 1.00 | 1.00 | 1.00 | 1.00 |
| Polybond 1009 | Gew.-% | | | 1.00 | 2.00 | |
| | | | | | | |
| E-Modul | MPa | 230 | 260 | 230 | 230 | 550 |
| Bruchspannung | MPa | 21 | 22 | 22 | 21 | 24 |
| Bruchdehnung | % | 240 | 230 | 250 | 220 | 200 |
| Wärmealterungsbeständigkeit: Erhalt BS/BD¹⁾ | %/% | 65/60 | 62/58 | 68/60 | 70/55 | 72/65 |
| SMF 240°C | s | 45 | 47 | 51 | 59 | 51 |
| SMF 260°C | s | 43 | 43 | 48 | 57 | 47 |
| CaCl₂-Beständigkeit: Rissbildung Erhalt BS/BD¹⁾ | %/% | ++ 100/100 | ++ 100/100 | ++ 100/100 | ++ 100/100 | ++ 100/100 |
| Dyn. Zug-Dehnungstest: Delaminierung nach Zyklen | - | Keine²⁾ | Keine²⁾ | Keine²⁾ | Keine²⁾ | Keine²⁾ |

| | | | | | | |
|---|---|---|---|---|---|---|
| ¹⁾ BS = Bruchspannung, BD = Bruchdehnung ²⁾ Keine Delaminierung nach 1.3 Mio. Zyklen | | | | | | |

**Tabelle 2: Vergleichsbeispiele VB1 bis VB7**

| **Komponenten** | **Einheit** | **VB1** | **VB2** | **VB3** | **VB4** | **VB5** | **VB6** |
|---|---|---|---|---|---|---|---|
| PA6-Polyetherblockamid | Gew.-% | 58.6 | 56.6 | 58.6 | 56.6 | | 39.5 |
| Pebax 5533 | Gew.-% | | | | | 60.0 | |
| Tafmer MC201 | Gew.-% | 30.0 | 30.0 | 20.0 | 20.0 | | |
| Fusabond N493 | Gew.-% | | | | | 6.00 | |
| Exxelor VA 1801 | Gew.-% | | | | | 4.00 | 20.0 |
| PA6 | Gew.-% | 10.0 | 10.0 | 20.0 | 20.0 | | |
| PA1010 | | | | | | 30.0 | |
| PA12 | Gew.-% | | | | | | 39.5 |
| Kaliumiodid | Gew.-% | 0.35 | 0.35 | 0.35 | 0.35 | | |
| Kupferiodid | Gew.-% | 0.05 | 0.05 | 0.05 | 0.05 | | |
| Irganox/Anox | Gew.-% | 1.00 | 1.00 | 1.00 | 1.00 | | 1.00 |
| Euthylen Schwarz | Gew.-% | 1.00 | 1.00 | 1.00 | 1.00 | | |
| Polybond 1009 | Gew.-% | | 2.00 | | 2.00 | | |
| | | | | | | | |
| E-Modul | MPa | 250 | 250 | 570 | 560 | 840 | 880 |
| Bruchspannung | MPa | 21 | 21 | 25 | 25 | 26 | 26 |
| Bruchdehnung | % | 270 | 250 | 220 | 200 | 220 | 250 |
| Wärmealterungsbeständigkeit: Erhalt BS/BD¹⁾ | %/% | 58/55 | 64/53 | 65/52 | 67/51 | 25/15 | 45/35 |
| SMF 240°C | S | 45 | 51 | 48 | 58 | 26 | 27 |
| SMF 260°C | S | 43 | 48 | 46 | 55 | 22 | 25 |
| CaCl₂-Beständigkeit: Rissbildung Erhalt BS/BD¹⁾ | %/% | ++ 100/100 | ++ 100/100 | + 95/90 | + 96/85 | + 90/85 | ++ 95/90 |
| Dyn. Zug-Dehnungstest: Delaminierung nach Zyklen | - | 30'000 | 32'000 | 23'000 | 26'000 | 17'000 | 22'000 |

| | | | | | | | |
|---|---|---|---|---|---|---|---|
| ¹⁾ BS = Bruchspannung, BD = Bruchdehnung | | | | | | | |

### PA6-Polyetherblockamid:

Polyetheramid aus PA6-Dicarbonsäure (76 Gew.-%) und Polypropylenglykol-Diamin-Segmenten (24 Gew.-%, Schmelzpunkt = 210 °C, relative Viskosität =1.85, EMS-CHEMIE (CH)

### Tafmer MH5020C:

Tafmer MH5020C ist ein Ethylen-1-Buten-Copolymer mit 50 Gew.-% But-1-en, von Mitsui Chemicals (JP); 1.2 Gew.-% Maleinsäureanhydrid; Dichte 0.866 g/cm³; MFR 1.2 g/10 min bei 230°C und 2,16 kg gemessen nach ASTM D 1238.

### Tafmer MH7020:

Tafmer MH7020 ist ein Ethylen-1-Buten-Copolymer mit 30 Gew.-% But-1-en, von Mitsui Chemicals (JP); 1.2 Gew.-% Maleinsäureanhydrid; Dichte 0.873 g/cm³; MFR 1.5 g/10 min bei 230°C und 2,16 kg gemessen nach ASTM D 1238.

### Pebax 5533 SA 01:

Polyetherblockamid auf Basis von PA12-Hartsegmenten und Polytetrahydrofuran-Ethersegmenten mit einem Schmelzpunkt von 155°C und einer Shorehärte von 54 (ISO 868), Arkema (FR)

### Tafmer MC201:

Tafmer MC201 ist eine Mischung aus 67 Gew.-% Ethylen-Propylen-Copolymer (20 Gew.-% Propylen) und 33 Gew.-% Ethylen-But-1-en-Copolymer (15 Gew.-% But-1-en) gepfropft mit 0.5 Gew.-% Maleinsäureanhydrid von Mitsui Chemicals (JP)

### Fusabond N493:

Fusabond N493 ist ein Ethen-Oct-l-en-Copolymer, gepfropft mit Maleinsäureanhydrid (0.5 Gew.-%), MFR 1.6 g/10 min bei 230°C und 2,16 kg gemessen nach ASTM D 1238 von Dupont (USA)

### Exxelor VA1801:

Exxelor VA1801 ist ein Ethen-Propen-Copolymer gepfropft mit 0.7 Gew.-% Maleinsäureanhydrid von ExxonMobil Chemicals (USA); Dichte 0.88 g/cm³; MFR 9.0 g/10 min bei 230°C und 10.0 kg gemessen nach ISO 1133; Tg = -44°C.

### PA6:

Polycaprolactam mit Schmelzpunkt von 222°C und einer relativen Viskosität von 3.6 (Schwefelsäure, 1 Gew.-%, 20°C, ISO 307 (2013)), EMS-CHEMIE (CH)

### Kaliumiodid:

KI von AJAY Europe S.A.R.L. (FR)

### Kupfer(I)iodid:

CuI von William Blythe (UK)

### Irganox/Anox:

Mischung aus Irganox 1010 (CAS 6683-19-8, phenolisches Antioxidants von BASF) und Anox 20 (CAS 6683-19-8, phenolisches Antioxidants von Addivant) im Verhältnis 7:3

### Euthylen Schwarz 00-6005 C4:

Farbruss-Masterbatch auf Polyethylenbasis mit 40 Gew.-% Farbruss, BASF Color Solutions

### Polybond:

Polybond 1009 ist ein Acrylsäure-gepfropftes Polyethylen hoher Dichte (AA-HDPE) von Addivant mit einem Pfropfgrad von 6.0 Gew.-% ; Dichte 0.95 g/cm<3>; MFR 5.0 g/10 min bei 190°C und 2,16 kg gemessen nach ASTM D 1238; Tm = 127°C.

Die Messungen wurden nach folgenden Normen und an folgenden Prüfkörpern durchgeführt:
Prüfkörper im trockenen Zustand werden nach dem Spritzguss mindestens 48 h bei Raumtemperatur in trockener Umgebung, d.h. über Silicagel gelagert.

Das **thermische** Verhalten, der Schmelzpunkt (Tm), die Schmelzenthalpie (ΔHm) und die Glasübergangstemperatur (Tg), wurde anhand der ISO-Norm 11357-1, -2 und -3 (2013) am Granulat bestimmt. Die Differential Scanning Calorimetry (DSC) wurde mit Aufheizrate von 20 K /min durchgeführt.

Die **relative Viskosität** (ηᵣₑₗ) von Polyamidelastomeren der Komponente (A) wurde bestimmt nach DIN EN ISO 307 (2013) an Lösungen von 0.5 g Polymer gelöst in 100 ml m-Kresol bei einer Temperatur von 20 °C. Als Probe wurde Granulat verwendet.

Die **relative Viskosität** (ηᵣₑₗ) von Polyamiden der Komponente (C) wurde bestimmt nach DIN EN ISO 307 (2013) an Lösungen von 1.0 Gew.-% Polymer gelöst in Schwefelsäure (98%) bei einer Temperatur von 20 °C. Als Probe wurde Granulat verwendet. **Zug-E-Modul, Bruchspannung und Bruchdehnung:** Zug-E-Modul, Bruchspannung und Bruchdehnung wurden nach ISO 527 (2012) mit einer Zuggeschwindigkeit von 1 mm/min (Zug-E-Modul) bzw. mit einer Zuggeschwindigkeit von 50 mm/min (Bruchspannung, Bruchdehnung) am ISO-Zugstab, Norm ISO/CD 3167 (2014), Typ A1, 170 x 20/10 x 4 mm bei Temperatur 23 °C im trockenen Zustand bestimmt.

Bestimmung der **Schmelzefestigkeit** (SMF): Unter der Schmelzefestigkeit wird das "Standvermögen" des Vorformlings beim Extrusionsblasformen verstanden. Wie bereits oben erwähnt sind zum Extrusionsblasformen nur Formmassen geeignet, deren Schmelzefestigkeit in einem bestimmten Bereich, d.h. in einem geeigneten Verarbeitungsfenster, liegt. Die Anmelderin hat ein eigenes, praxisbezogenes Verfahren entwickelt, nach welchem beurteilt wird, ob die Schmelzefestigkeit im genannten Bereich liegt. Bei diesem Verfahren wird mit Hilfe eines Einwellenextruders (Schneckendurchmesser = 45 mm, L/D = 25, Schwabenthan SM30U, Berlin) ein Schmelzeschlauch kontinuierlich über einen Winkelkopf extrudiert. Als Messgrösse wird die Zeit verwendet, die der Schlauch benötigt, um den Abstand von der Düse bis zum Boden zurückzulegen. Dieser Abstand beträgt bei der verwendeten Anordnung 100 cm. Bei der Messung der Schmelzefestigkeit wird mit einem konstanten Ausstoss von 100 Kubikzentimetern Formmassen-Schmelze pro Minute und einer an den Polymertyp angepassten Temperatur (siehe Werte in Tabelle 1 und 2) gefahren. Die Zeitmessung wird in dem Moment gestartet, wenn der aus einer ringförmigen Extrusionsdüse kontinuierlich austretende Schmelzeschlauch an der Extrusionsdüse mit einem Spachtel abgestochen wird. Man stoppt die Zeit, sobald der neu austretende und nach unten wandernde Schlauchabschnitt den Boden berührt (siehe Figur 2 in EP1841824B1). Die so bestimmte Schmelzefestigkeit wird in Sekunden angegeben. Ein Material, das das zunehmende Eigengewicht (durch die laufend extrudierte Schmelze) schlecht tragen kann, d.h. sich viskos zu dehnen beginnt, wird sich stärker längen und dadurch die Spitze des Schmelzeschlauchs den Boden früher berühren, d.h. die kürzere Messzeit entspricht einer geringeren Schmelzefestigkeit. Der praktische Vorteil dieser Methode zur Ermittlung der Blasformfähigkeit ist, dass sie nicht nur auf einer einzigen isoliert betrachteten Eigenschaft wie dem Molekulargewicht des Polyamids oder einer Viskosität beruht, sondern dass noch alle weiteren Einflussgrössen, die für das Verhalten des extrudierten Vorformling-Schmelzeschlauchs relevant sind, automatisch und auf integrale Weise in die gemessene Zeit einfliessen.

Bestimmung der **Calciumchlorid-Beständigkeit:** Für die Bestimmung der Calciumchlorid-Beständigkeit wurden ISO-Zugsstäben gemäss der Norm ISO/CD 3167 (2014), Typ A1, 170 x 20/10 x 4 mm verwendet. Der Test wurde in 20 Zyklen durchgeführt, wobei pro Zyklus
- die Prüfkörper für 2 Stunden bei 80°C und einer rel. Feuchte von 95% gelagert wurden,
- dann mit einer konzentrierten wässrigen Calciumchlorid-Lösung, die CaCl₂-Konzentration betrug 74.5 g/100ml Lösung, beidseitig eingesprüht wurden (Simulation des "Salznebels" beim Autofahren im Winter)
- und für 5 Stunden bei 100°C in Luft gelagert wurden.

Nach 5, 10, 15 und 20 Zyklen wurden die Prüfkörper visuell mit Hilfe eines Mikroskop (5-10 fache Vergrösserung) auf Rissbildung untersucht, und ein Zug-Dehnungsversuch gemäss ISO 527 (2012) durchgeführt (im trockenen Zustand), wobei die Bruchspannung und die Bruchdehnung bestimmt wurden (jeweils 5 Probenkörper wurden gemessen).

Bewertung für Rissbildung: ++: keine Rissbildung, +: einige wenige kleine Risse, o: einige grosse Risse, oo: viele grosse Risse

Dynamischer Zug-Dehungstest **(Delaminierung):** Als Prüfkörper wurden aus spritzgegossenen Platten der Dimension 100 x 100 x 3 mm ausgestanzte Zugstäbe des Typs 2 gemäss ISO 37 (2011) verwendet . Die Zugstäbe wurden derart in die temperierbare Zug-Dehnungsapparatur Instron E3000 eingespannt, dass die freie Prüfkörperlänge zwischen den beiden Einspannvorrichtungen 45 mm (Ausgangsposition) betrug. Nach Aufheizen der Apparatur auf 150°C wurde der Zugstab mit einer Frequenz von 10 Hz und einem Hub von 9 mm, was einer 20%igen Dehnung des Zugstabes entspricht, periodisch gedehnt und dann wieder gestaucht. Nach 1.3 Mio. derartiger Zyklen wird der dynamische Zug-Dehungsversuch beendet. Bestimmt wurde diejenige Anzahl an Zyklen, bei der erste Anzeichen einer Delaminierung auftraten.

### Wärmealterungsbeständigkeit (WAB):

Für die Bestimmung der Wärmealterungsbeständigkeit wurden ISO-Zugstäbe, Norm ISO/CD 3167 (2014), Typ A1, 170 x 20/10 x 4 mm, in einem Umluftofen (Binder FD115) bei 150 °C gelagert. Nach einer Lagerungsdauer von 1000 Stunden wurde ein Zug-Dehnungsversuch nach ISO 527 (2012) bei 23 °C und einer Zuggeschwindigkeit von 50 mm/min an den trockenen Zugstäben ausgeführt (jeweils 5 Prüfkörper pro Formmasse) und die Bruchspannung sowie die Bruchdehnung bestimmt. In den obigen Tabellen wird der prozentuale Erhalt der Bruchspannung bzw. Bruchdehnung nach 1000 Stunden Lagerung bezogen auf die jeweiligen Werte vor der Wärmelagerung angegeben.

## Patentansprüche

1. Thermoplastische Formmasse bestehend aus
(A) 51 bis 69.9 Gew.-% Polyamid-Elastomer,
ausgewählt aus der Gruppe bestehend aus: Polyetheramid, Polyetheresteramid, oder eine Mischung davon,
mit Hartsegmenten ausgewählt aus der Gruppe bestehend aus:.PA6, PA66, PA6/66, PA610, PA612, PA614, PA616 oder eine Kombination davon, und mit Weichsegmenten in Form von OH- oder NH₂-funktionalisierten Polyethersegmenten;
(B) 15 bis 38 Gew.-% Ethylen-α-Olefin-Copolymer,
wobei das α-Olefin ausgewählt ist aus der Gruppe bestehend aus: But-1-en, Pent-1-en, Hex-1-en, Hept-1-en und Oct-1-en oder eine Kombination davon, und das Ethylen-α-Olefin-Copolymer mit wenigstens einem System ausgewählt aus der Gruppe bestehend aus: Acrylsäure, Methacrylsäure, Maleinsäureanhydrid, gepfropft ist,
wobei der Pfropfgrad 0.8 bis 2.0 Gew.-% bezogen auf das gepfropfte Ethylen-α-Olefin-Copolymer beträgt;
(C) 3 bis 25 Gew.-% Polyamid, ausgewählt aus der Gruppe bestehend aus: PA6, PA66, PA6/66, PA610, PA612, PA614, PA616, PA6/610, PA66/610 oder Mischungen davon;
(D) 0.1 bis 2.0 Gew.-% Hitzestabilisatoren auf Basis von Kupfer und/oder Iodid, Lanthanoid-Verbindungen, organischen Stabilisatoren oder eine Mischung davon;
(E) 0 bis 5.0 Gew.-% Additive, verschieden von (A) bis (D);
wobei die Summe (A) bis (E) 100 Gew.-% der gesamten Formmasse ergibt und mit der Massgabe, dass die Summe aus (B) und (C) im Bereich von 30 bis 48 Gew.-% bezogen auf die gesamte Formmasse liegt.

2. Formmasse nach Anspruch 1, **dadurch gekennzeichnet, dass** der Anteil der **Komponente (A)** in der gesamten Formmasse im Bereich von 52-67.8 Gew.-% liegt, vorzugsweise im Bereich von 53-64.6 Gew.-%, insbesondere vorzugsweise im Bereich von 56-63.5 Gew.-%.

3. Formmasse nach einem der vorhergehenden Ansprüche, **dadurch gekennzeichnet, dass** die Weichsegmente des Polyamid-Elastomers der Komponente (A) ausgewählt sind aus der Gruppe bestehend aus: Polypropylengykol (PPG), Polytetrahydrofuran (PTHF), oder eine Kombination davon;
und/oder dass die Hartsegmente des Polyamid-Elastomers der Komponente (A) ausgewählt sind aus der Gruppe bestehend aus: PA6, PA66, PA6/66 oder eine Kombination davon, wobei vorzugsweise die Hartsegmente ausschliesslich durch PA6 gebildet werden;
und/oder das Polyamid-Elastomer der Komponente (A) oder die Mischung der Polyamid-Elastomere der Komponente (A) einen Schmelzpunkt gemessen gemäss ISO 11357-3 (2013) bei einer Aufheizrate von 20 °C/min im Bereich von 180-250 °C, vorzugsweise im Bereich von 200-220 °C aufweist, und/oder eine relative Viskosität, gemessen gemäss ISO 307 (2013) bei einer Konzentration von 0.5 g Polymer in 100 ml m-Kresol und einer Temperatur von 20 °C, im Bereich von 1.40 bis 2.40, vorzugsweise im Bereich von 1.50-2.20;
und/oder dass die zahlenmittlere Molmasse der Weichsegmente, insbesondere der Polyetherdiole bzw. Polyetherdiamine, bei 200 bis 5000 g/mol und vorzugsweise bei 400 bis 3000 g/mol liegt, wobei vorzugsweise der Anteil der Weichsegmente am Polyetheresteramid bzw. Polyetheramid bevorzugt 5 bis 60 Gew.-% und besonders bevorzugt 20 bis 50 Gew.-% beträgt.

4. Formmasse nach einem der vorhergehenden Ansprüche, **dadurch gekennzeichnet, dass** der Anteil der **Komponente (B)** in der gesamten Formmasse im Bereich von 18-36 Gew.-% liegt, vorzugsweise im Bereich von 20-33 Gew.-% oder im Bereich von 25-33 Gew.-%.

5. Formmasse nach einem der vorhergehenden Ansprüche, **dadurch gekennzeichnet, dass** das gesamte Ethylen-α-Olefin-Copolymer der Komponente (B) ausschliesslich mit Maleinsäureanhydrid gepfropft ist;
und/oder dass der Pfropfgrad des Ethylen-α-Olefin-Copolymer der Komponente (B) im Bereich von 0.9-1.6 Gew.-%, vorzugsweise im Bereich von 1.0-1.4 Gew.-% liegt;
und/oder dass die Komponente (B) ausschliesslich aus einem Ethylen-1-Buten-Copolymer besteht, das mit Maleinsäureanhydrid mit einem Pfropfgrad im Bereich von 1.1-1.3 Gew.-%, bezogen auf das gepfropfte Ethylen-1-Buten-Copolymer;
und/oder das Ethylen-α-Olefin-Copolymer der Komponente (B) oder die Mischung der Ethylen-α-Olefin-Copolymere der Komponente (B) einen Schmelzpunkt im Bereich von 40-80 °C, vorzugsweise im Bereich von 60-70 °C aufweist, und/oder Glasübergangspunkt von weniger als -20 °C, vorzugsweise von weniger als -30 °C, und/oder einen Schmelzflussindex (MFR) im Bereich von 0.5-5.0 g/10 min oder 0.8-2.0 g/10 min, vorzugsweise im Bereich von 1.0-1.5 g/10 min bei 230°C und 2,16 kg gemessen nach ASTM D 1238.

6. Formmasse nach einem der vorhergehenden Ansprüche, **dadurch gekennzeichnet, dass** der Anteil der **Komponente (C)** in der gesamten Formmasse im Bereich von 5-22 Gew.-% liegt, vorzugsweise im Bereich von 7-18 Gew.-% oder im Bereich von 8-15 Gew.-%.

7. Formmasse nach einem der vorhergehenden Ansprüche, **dadurch gekennzeichnet, dass** das Polyamid der Komponente (C) ausgewählt ist aus der Gruppe bestehend aus: PA6, PA66, PA6/66, PA610, PA612, PA614, PA616 wobei das Polyamid der Komponente (C) vorzugsweise ausgewählt ist aus der Gruppe bestehend aus:
PA6, PA66, PA6/66, und wobei insbesondere vorzugsweise die Komponente (C) ausschliesslich gebildet wird durch PA6;
und/oder dass das Polyamid der Komponente (C) eine relative Viskosität von 3.4-4.2 (ISO 307 (2013), Schwefelsäure, 1.0 Gew.-%, 20 °C), vorzugsweise im Bereich von 3.6-4.0 aufweist;
und/oder dass das Polyamid der Komponente (C) PA6 enthält oder ausschliesslich aus PA6 besteht, wobei dieses PA6 eine relative Viskosität von 3.4-4.2 (ISO 307 (2013), Schwefelsäure, 1.0 Gew.-%, 20 °C), vorzugsweise im Bereich von 3.5-4.1 aufweist.

8. Formmasse nach einem der vorhergehenden Ansprüche, **dadurch gekennzeichnet, dass** der Anteil der **Komponente (D)** in der gesamten Formmasse im Bereich von 0.2-2.0 Gew.-% liegt, vorzugsweise im Bereich von 0.3-2.0 Gew.-% und insbesondere im Bereich von 0.3-1.5 Gew.-%.

9. Formmasse nach einem der vorhergehenden Ansprüche, **dadurch gekennzeichnet, dass** die Hitzestabilisatoren der Komponente (D) Systeme enthalten oder bestehen aus Systemen ausgewählt aus der Gruppe bestehend aus: Kupfer(I)iodid, Kaliumiodid, organischen Stabilisatoren, oder eine Mischung davon, wobei vorzugsweise die organischen Stabilisatoren ausgewählt sind aus der Gruppe bestehend aus: Phenole, insbesondere vorzugsweise in Form von Pentaerythritol tetrakis(3-(3,5-di-tert-butyl-4-hydroxyphenyl)propionat), Tetrakismethylene (3,5-di-t-butyl-4-hydroxyhydrocinnamat)methan oder einer Mischung dieser Systeme; und/oder dass die Hitzestabilisatoren der Komponente (D) enthalten oder ausschliesslich gebildet werden durch eine Mischung aus Kupfer(I)iodid, Kaliumiodid, wobei vorzugsweise der Anteil an Kupfer(I)iodid im Bereich von 0.02-0.1 Gew.-% liegt und der Anteil von Kaliumiodid im Bereich von 0.2-0.6 Gew.-%, jeweils bezogen auf die gesamte Formmasse;
und/oder dass die Hitzestabilisatoren der Komponente (D) enthalten oder ausschliesslich gebildet werden durch eine Mischung aus Pentaerythritol tetrakis(3-(3,5-di-tert-butyl-4-hydroxyphenyl)propionat) und Tetrakismethylene (3,5-di-t-butyl-4-hydroxyhydrocinnamat)methan, vorzugsweise in einem Gewichtsverhältnis von 1:1-3:1, vorzugsweise im Bereich von 2:1-8:3 oder im Bereich von 7:3;
und/oder dass die Hitzestabilisatoren der Komponente (D) Systeme enthalten oder bestehen aus Systemen ausgewählt aus der Gruppe bestehend aus: Kupfer(I)iodid, Kaliumiodid, Lanthanacetat, Lanthanhydroxid, Lanthanoxid, Ceracetat, Certetrahydroxid, Ceroxid, oder Mischungen davon.

10. Formmasse nach einem der vorhergehenden Ansprüche, **dadurch gekennzeichnet, dass** der Anteil der **Komponente (E)** in der gesamten Formmasse im Bereich von 0-4.0 Gew.-% liegt, vorzugsweise im Bereich von 0.1-3.0 Gew.-% oder im Bereich von 0.2-2.5 Gew-%;
und/oder dass die Additive der Komponente (E) Systeme ausgewählt aus der folgenden Gruppe enthalten oder aus diesen Systemen bestehen: Kristallisations-Beschleuniger oder -Verzögerer, Fliesshilfsmittel, Gleitmittel, Entformungsmittel, Pigmente, Farbstoff- und Markierungsstoffe, Verarbeitungshilfsmittel, Antistatika, Russ, Graphit, Kohlenstoffnanoröhrchen, Residuen aus Polymerisationsverfahren wie Katalysatoren, Salze und deren Derivate, Antioxidantien, Antiozonantien, Lichtschutzmitteln, UV-Stabilisatoren, UV-Absorbern oder UV-Blockern, IR-Absorbern, NIR-Absorbern, Antiblockmitteln, Nukleierungsmitteln, Kettenreglern, Entschäumern, kettenverlängernden Additiven, Leitfähigkeitsadditiven, Trennmitteln, organischen Pigmenten, Russ, Graphit, Graphen, photochromen Agenzien, Entformungsmitteln, optischen Aufhellern, sowie Mischungen und Kombinationen hieraus, wobei vorzugsweise die Additive der Komponente (E) Systeme ausgewählt aus der folgenden Gruppe enthalten oder aus diesen Systemen bestehen: Entformunghilfsmittel, Lichtstabilisatoren, Pigmente, Farbstoffe, Kettenverlängerer, vorzugsweise als acrylsäuremodifizierte Polyolefine mit einem Pfropfgrad von über 4 Gew.-% und/oder Kombination eines Polycarbonats mit einem säureterminierten Polyamid, wobei chemisch modifizierte Polyolefine insbesondere ausgewählt sind als mit Acrylsäure gepfropftes Polyethylen, vorzugsweise mit einem Pfropfgrad im Bereich von 5-7 Gew.-%, bezogen auf das gepfropfte Polyethylen, wobei es sich beim Polyethylen vorzugsweise um ein HDPE handelt.

11. Formmasse nach einem der vorhergehenden Ansprüche, **dadurch gekennzeichnet, dass** die Summe aus (B) und (C) im Bereich von 32-45 Gew.-% liegt, vorzugsweise im Bereich von 35-42 Gew.-% und insbesondere bevorzugt im Bereich von 36 - 41 Gew.-%.

12. Formmasse nach einem der vorhergehenden Ansprüche, **dadurch gekennzeichnet, dass** die Formmasse eine Schmelzefestigkeit im Bereich von 30-70 Sekunden, vorzugsweise im Bereich von 35-60 Sekunden oder im Bereich von 40-55 Sekunden aufweist;
und/oder dass die Formmasse ein Zug-E-Modul von höchstens 800 MPa aufweist (ISO 527 (2012), trockener Zustand), vorzugsweise im Bereich von 100-700 MPa, insbesondere vorzugsweise im Bereich von 200-600 MPa;
und/oder dass die Formmasse bei dynamisch mechanischer Beanspruchung nach wenigstens 1.3 Million Zyklen mit wechselnder Druck- und Zugbelastung bei 150 °C keine Delaminierung zeigt.

13. **Verfahren** zur Herstellung einer Formmasse nach einem der vorhergehenden Ansprüche, **dadurch gekennzeichnet, dass** die Komponenten (A)-(E) gemeinsam in gegebenenfalls aufgeschmolzener Form in eine Mischvorrichtung, vorzugsweise in Form einer Extrusionsvorrichtung mit vorzugsweise mehreren Wellen, zudosiert werden.

14. **Verwendung** einer Formmasse nach einem der vorhergehenden Ansprüche in einem Spritzgiessverfahren, Extrusionsverfahren oder einem Coextrusionsverfahren, vorzugsweise in einem Blasformverfahren, vorzugsweise einem Extrusionsblasformverfahren oder einem Streckblasformverfahren, einschliesslich 3D-Blasformen, Coextrusionsblasformen, Coextrusions-3D-Blasformen, sequentielle Coextrusion, Coextrusions-Saugblasformen, und sequentielles Blasformen, wobei vorzugsweise ein Vorformling, welcher in einem vorangeschalteten Arbeitsschritt durch konventionelles Spritzgiessen hergestellt wird, in einem ersten Prozessschritt aufgeheizt wird, vorzugsweise mit einem Infrarot-Strahler, und nach dem Erwärmen der Vorformling in ein Werkzeug gefahren wird oder Heizer aus dem Werkzeug gefahren werden, durch das Schliessen des Werkzeugs am Flaschenhals ggf. eine Längsverstreckung erfolgt, wodurch der Vorformling axial gehalten wird und dann ein Gas in den Vorformling eingeleitet wird, der sich unter der Druckbeanspruchung ausdehnt und dabei die Werkzeugkontur abbildet.

15. **Formkörper** aus einer Formmasse nach einem der vorhergehenden Ansprüche, vorzugsweise in Form eines Rohres oder Behälters, insbesondere vorzugsweise in Form eines Hohlkörpers oder einer Leitung, vorzugsweise für die Verwendung im Kraftfahrzeugbereich, einschliesslich Rohre oder Behälter wie Ladeluftrohre für ein Automobil, fluidführende Mono- oder Mehrschichtleitungen, die glatt oder gewellt sein können, wie Kraftstoffleitungen, Hydraulikleitungen, Bremsleitungen, Kupplungsleitungen oder Kühlflüssigkeitsleitungen, Bremsflüssigkeitsbehälter oder Kraftstoffbehälter, wobei der Formkörper zusätzlich weitere Schichten aus anderen thermoplastischen Materialien aufweisen kann, wobei vorzugsweise eine solche weitere Schicht aus einem System ausgewählt aus der folgenden Gruppe besteht: PA 612, PA 610, PA 11, PA 12, PA 1010, PA 1012, PA 616, PA 6, PA 66, PA 10T/612, PA 9T/MT (M = 2-Methyloctan-1,8-diamin), PA 46, oder Mischungen davon.

## Claims

1. Thermoplastic moulding composition consisting of
(A) 51 to 69.9 wt% of polyamide elastomer,
selected from the group consisting of: polyetheramide, polyetheresteramide, or a mixture thereof,
having hard segments selected from the group consisting of: PA6, PA66, PA6/66, PA610, PA612, PA614, PA616 or a combination thereof, and having soft segments in the form of OH- or NH₂-functionalized polyether segments;
(B) 15 to 38 wt% of ethylene-α-olefin copolymer,
where the α-olefin is selected from the group consisting of: but-1-ene, pent-1-ene, hex-1-ene, hept-1-ene and oct-1-ene or a combination thereof,
and the ethylene-α-olefin copolymer is grafted with at least one system selected from the group consisting of: acrylic acid, methacrylic acid, maleic anhydride,
where the degree of grafting is 0.8 to 2.0 wt% based on the grafted ethylene-α-olefin copolymer;
(C) 3 to 25 wt% of polyamide selected from the group consisting of: PA6, PA66, PA6/66, PA610, PA612, PA614, PA616, PA6/610, PA66/610 or mixtures thereof;
(D) 0.1 to 2.0 wt% of heat stabilizers based on copper and/or iodide, lanthanoid compounds, organic stabilizers or a mixture thereof;
(E) 0 to 5.0 wt% of additives, different from (A) to (D);
where the sum of (A) to (E) makes 100 wt% of the total moulding composition and
with the proviso that the sum of (B) and (C) is in the range from 30 to 48 wt% based on the total moulding composition.

2. Moulding composition according to Claim 1, **characterized in that** the fraction of **component (A)** in the total moulding composition is in the range of 52-67.8 wt%, preferably in the range of 53-64.6 wt%, especially preferably in the range of 56-63.5 wt%.

3. Moulding composition according to either of the preceding claims, **characterized in that** the soft segments of the polyamide elastomer of component (A) are selected from the group consisting of: polypropylene glycol (PPG), polytetrahydrofuran (PTHF), or a combination thereof;
and/or **in that** the hard segments of the polyamide elastomer of component (A) are selected from the group consisting of: PA6, PA66, PA6/66 or a combination thereof, where preferably the hard segments are formed exclusively by PA6; and/or the polyamide elastomer of component (A) or the mixture of polyamide elastomers of component (A) has a melting point, measured according to ISO 11357-3 (2013) at a heating rate of 20°C/min, in the range of 180-250°C, preferably in the range of 200-220°C, and/or a relative viscosity, measured according to ISO 307 (2013) at a concentration of 0.5 g of polymer in 100 ml of m-cresol and a temperature of 20°C, in the range from 1.40 to 2.40, preferably in the range of 1.50-2.20;
and/or **in that** the number-average molar mass of the soft segments, especially of the polyetherdiols and/or polyetherdiamines, is 200 to 5000 g/mol and preferably 400 to 3000 g/mol, where preferably the fraction of the soft segments in the polyetheresteramide and/or polyetheramide is preferably 5 to 60 wt% and more preferably 20 to 50 wt%.

4. Moulding composition according to any of the preceding claims, **characterized in that** the fraction of **component (B)** in the total moulding composition is in the range of 18-36 wt%, preferably in the range of 20-33 wt% or in the range of 25-33 wt%.

5. Moulding composition according to any of the preceding claims, **characterized in that** the total ethylene-α-olefin copolymer of component (B) is grafted exclusively with maleic anhydride;
and/or **in that** the degree of grafting of the ethylene-α-olefin copolymer of component (B) is in the range of 0.9-1.6 wt%, preferably in the range of 1.0-1.4 wt%;
and/or **in that** component (B) consists exclusively of an ethylene-1-butene copolymer which is grafted with maleic anhydride with a degree of grafting in the range of 1.1-1.3 wt%, based on the grafted ethylene-1-butene copolymer;
and/or the ethylene-α-olefin copolymer of component (B) or the mixture of the ethylene-α-olefin copolymers of component (B) has a melting point in the range of 40-80°C, preferably in the range of 60-70°C, and/or a glass transition point of less than -20°C, preferably of less than -30°C, and/or a melt flow index (MFR) in the range of 0.5-5.0 g/10 min or 0.8-2.0 g/10 min, preferably in the range of 1.0-1.5 g/10 min at 230°C and 2.16 kg as measured according to ASTM D 1238.

6. Moulding composition according to any of the preceding claims, **characterized in that** the fraction of **component (C)** in the total moulding composition is in the range of 5-22 wt%, preferably in the range of 7-18 wt% or in the range of 8-15 wt%.

7. Moulding composition according to any of the preceding claims, **characterized in that** the polyamide of component (C) is selected from the group consisting of:
PA6, PA66, PA6/66, PA610, PA612, PA614, PA616, where the polyamide of component (C) is preferably selected form the group consisting of: PA6, PA66, PA6/66, and where especially preferably component (C) is formed exclusively of PA6;
and/or **in that** the polyamide of component (C) has a relative viscosity of 3.4-4.2 (ISO 307 (2013), sulfuric acid, 1.0 wt%, 20°C), preferably in the range of 3.6-4.0;
and/or **in that** the polyamide of component (C) comprises PA6 or consists exclusively of PA6, where this PA6 has a relative viscosity of 3.4-4.2 (ISO 307 (2013), sulfuric acid, 1.0 wt%, 20°C), preferably in the range of 3.5-4.1.

8. Moulding composition according to any of the preceding claims, **characterized in that** the fraction of **component (D)** in the total moulding composition is in the range of 0.2-2.0 wt%, preferably in the range of 0.3-2.0 wt% and especially in the range of 0.3-1.5 wt%.

9. Moulding composition according to any of the preceding claims, **characterized in that** the heat stabilizers of component (D) comprise systems or consist of systems selected from the group consisting of: copper(I) iodide, potassium iodide, organic stabilizers, or a mixture thereof, where preferably the organic stabilizers are selected from the group consisting of: phenols, especially preferably in the form of pentaerythritol tetrakis(3-(3,5-di-tert-butyl-4-hydroxyphenyl)propionate), tetrakismethylene(3,5-di-t-butyl-4-hydroxyhydrocinnamato)methane or a mixture of these systems;
and/or **in that** the heat stabilizers of component (D) comprise or are exclusively formed by a mixture of copper(I) iodide, potassium iodide, where preferably the fraction of copper(I) iodide is in the range of 0.02-0.1 wt% and the fraction of potassium iodide is in the range of 0.2-0.6 wt%, based in each case on the total moulding composition;
and/or **in that** the heat stabilizers of component (D) comprise or are exclusively formed by a mixture of pentaerythritol tetrakis(3-(3,5-di-tert-butyl-4-hydroxyphenyl)propionate) and tetrakismethylene(3,5-di-t-butyl-4-hydroxy-hydrocinnamato)methane, preferably in a weight ratio of 1:1-3:1, preferably in the range of 2:1-8:3 or in the range of 7:3;
and/or **in that** the heat stabilizers of component (D) comprise systems or consist of systems selected from the group consisting of: copper(I) iodide, potassium iodide, lanthanum acetate, lanthanum hydroxide, lanthanum oxide, cerium acetate, cerium tetrahydroxide, cerium oxide, or mixtures thereof.

10. Moulding composition according to any of the preceding claims, **characterized in that** the fraction of **component (E)** in the total moulding composition is in the range of 0-4.0 wt%, preferably in the range of 0.1-3.0 wt% or in the range of 0.2-2.5 wt%;
and/or **in that** the additives of component (E) comprise systems selected from the following group or consist of these systems: crystallization accelerators or retardants, flow aids, lubricants, demoulding agents, pigments, dye and marking substances, processing aids, antistats, carbon black, graphite, carbon nanotubes. residues from polymerization processes such as catalysts, salts and derivatives thereof, antioxidants, antiozonants, light stabilizers, UV stabilizers, UV absorbers or UV blockers, IR absorbers, NIR absorbers, antiblocking agents, nucleating agents, chain transfer agents, defoamers, chain-extending additives, conductivity additives, release agents, organic pigments, carbon black, graphite, graphene, photochromic agents, demoulding agents, optical brighteners, and also mixtures and combinations thereof, where preferably the additives of component (E) comprise systems selected from the following group or consist of these systems: demoulding aids, light stabilizers, pigments, dyes, chain extenders, preferably as acrylic acid-modified polyolefins with a degree of grafting of more than 4 wt% and/or combination of a polycarbonate with an acid-terminated polyamide, where chemically modified polyolefins are especially selected as polyethylene grafted with acrylic acid, preferably with a degree of grafting in the range of 5-7 wt%. based on the grafted polyethylene, where the polyethylene is preferably an HDPE.

11. Moulding composition according to any of the preceding claims, **characterized in that** the sum of (B) and (C) is in the range of 32-45 wt%, preferably in the range of 35-42 wt% and especially preferably in the range of 36-41 wt%.

12. Moulding composition according to any of the preceding claims, **characterized in that** the moulding composition has a melt strength in the range of 30-70 seconds, preferably in the range of 35-60 seconds or in the range of 40-55 seconds;
and/or **in that** the moulding composition has a tensile elasticity modulus of at most 800 MPa (ISO 527 (2012), dry state), preferably in the range of 100-700 MPa, especially preferably in the range of 200-600 MPa;
and/or **in that** the moulding composition exhibits no delamination under dynamic-mechanical stressing after at least 1.3 million cycles with alternating compressive and tensile loading at 150°C.

13. **Process** for producing a moulding composition according to any of the preceding claims, **characterized in that** components (A)-(E) in unison in optionally melted form are metered into a mixing apparatus, preferably in the form of an extrusion apparatus having preferably two or more screws.

14. **Use** of a moulding composition according to any of the preceding claims in an injection moulding process, an extrusion process or a coextrusion process, preferably in a blow moulding process, preferably an extrusion blow moulding process or a stretch blow moulding process, including 3D blow moulding, coextrusion blow moulding, coextrusion 3D blow moulding, sequential coextrusion, coextrusion suction blow moulding, and sequential blow moulding, where preferably a preform produced by conventional injection moulding in a preceding operation is heated in a first process step, preferably with an infrared emitter, and, after the heating of the preform, it is run into a mould or heaters are run out of the mould and the closing of the mould produces, optionally, a longitudinal stretching on the bottleneck, thereby holding the preform axially, and then a gas is introduced into the preform and expands under the compressive stress and in so doing produces the mould contour.

15. **Moulding** made from a moulding composition according to any of the preceding claims, preferably in the form of a pipe or container, especially preferably in the form of a hollow body or a line, preferably for use in the automotive sector, including pipes or containers such as charge-air pipes for a motor vehicle, fluid-bearing monolayer or multilayer lines, which may be smooth or corrugated, such as fuel lines, hydraulic lines, brake lines, clutch lines or cooling-fluid lines, brake-fluid containers or fuel containers, where the moulding may additionally have further layers made from other thermoplastic materials, where preferably one such further layer consists of a system selected from the following group: PA 612, PA 610, PA 11, PA 12, PA 1010, PA 1012, PA 616, PA 6, PA 66, PA 10T/612, PA 9T/MT (M = 2-methyloctane-1,8-diamine), PA 46, or mixtures thereof.

## Revendications

1. Composition de moulage thermoplastique constituée de
(A) 51 à 69,9 % en poids d'élastomère de polyamide,
choisi dans le groupe constitué par : polyétheramide, polyétheresteramide, ou un mélange de ceux-ci,
ayant des segments durs choisis dans le groupe constitué par : PA6, PA66. PA6/66, PA610, PA612, PA614, PA616 ou une combinaison de ceux-ci, et ayant des segments mous sous la forme de segments de polyéther à fonction OH ou NH2 ;
(B) 15 à 38 % en poids de copolymère éthylène-α-oléfine,
où l'a-oléfine est choisi dans le groupe constitué de : but-1-ène. pent-1-ène. hex-1-ène, hept-1-ène et oct-1-ène ou une combinaison de ceux-ci,
et le copolymère éthylène-α-oléfine est greffé avec au moins un système choisi dans le groupe constitué par : l'acide acrylique, l'acide méthacrylique, l'anhydride maléique,
où le degré de greffage est de 0,8 à 2,0 % en poids par rapport au copolymère éthylène-α-oléfine greffé ;
(C) 3 à 25 % en poids de polyamide choisi dans le groupe constitué par : PA6, PA66, PA6/66, PA610, PA612, PA614, PA616, PA6/610. PA66/610 ou leurs mélanges ;
(D) 0,1 à 2,0 % en poids de stabilisateurs thermiques à base de cuivre et/ou d'iodure, de composés lanthanoïdes, de stabilisateurs organiques ou d'un mélange de ceux-ci ;
(E) 0 à 5,0 % en poids d'additifs, différents de (A) à (D) ;
la somme de (A) à (E) représentant 100 % en poids de la composition de moulage totale et
à condition que la somme de (B) et (C) soit comprise entre 30 et 48% en poids par rapport à la composition de moulage totale.

2. Composition de moulage selon la revendication 1, **caractérisée en ce que** la fraction du composant (A) dans la composition de moulage totale est dans la gamme de 52-67,8 % en poids, de préférence dans la gamme de 53-64,6 % en poids, particulièrement de préférence dans la gamme de 56 63,5 % en poids.

3. Composition de moulage selon l'une quelconque des revendications précédentes, **caractérisée en ce que** les segments souples de l'élastomère polyamide du composant (A) sont choisis dans le groupe constitué par : le polypropylène glycol (PPG), le polytétrahydrofurane (PTHF), ou une combinaison de ceux-ci ;
et/ou **en ce que** les segments durs de l'élastomère de polyamide du composant (A) sont choisis dans le groupe constitué par : PA6, PA66, PA6/66 ou une combinaison de ceux-ci, où de préférence les segments durs sont formés exclusivement de PA6 ;
et/ou l'élastomère de polyamide du composant (A) ou le mélange d'élastomères de polyamide du composant (A) a un point de fusion, mesuré selon la norme ISO 11357-3 (2013) à une vitesse de chauffage de 20°C/min. dans la gamme de 180-250°C, de préférence dans la gamme de 200-220°C, et/ou une viscosité relative, mesurée selon la norme ISO 307 (2013) à une concentration de 0.5 g de polymère dans 100 ml de m-crésol et une température de 20°C, dans la gamme de 1,40 à 2,40, de préférence dans la gamme de 1,50 à 2,20 ;
et/ou **en ce que** la masse molaire moyenne en nombre des segments mous, en particulier des polyétherdiols et/ou des polyétherdiamines, est de 200 à 5000 g/mole et de préférence de 400 à 3000 g/mole, la fraction des segments mous dans le polyétheresteramide et/ou le polyétheramide étant de préférence de 5 à 60% en poids et plus préférablement de 20 à 50% en poids.

4. Composition de moulage selon l'une quelconque des revendications précédentes, **caractérisée en ce que** la fraction du composant (B) dans la composition de moulage totale est comprise dans la gamme de 18 à 36% en poids, de préférence dans la gamme de 20 à 33% en poids ou dans la gamme de 25 à 33% en poids.

5. Composition de moulage selon l'une quelconque des revendications précédentes, **caractérisée en ce que** le copolymère éthylène-α-oléfine total du composant (B) est greffé exclusivement avec de l'anhydride maléique ;
et/ou **en ce que** le degré de greffage du copolymère éthylène-α-oléfine du composant (B) est compris entre 0,9 et 1,6 % en poids, de préférence entre 1,0 et 1,4 % en poids ;
et/ou **en ce que** le composant (B) consiste exclusivement en un copolymère d'éthylène-1-butène qui est greffé avec de l'anhydride maléique avec un degré de greffage dans la gamme de 1,1-1,3 % en poids, par rapport au copolymère d'éthylène-1-butène greffé ;
et/ou le copolymère éthylène-α-oléfine du composant (B) ou le mélange des copolymères éthylène-α-oléfine du composant (B) a un point de fusion dans la gamme de 40-80°C, de préférence dans la gamme de 60-70°C, et/ou un point de transition vitreuse inférieur à -20°C, de préférence inférieur à -30°C, et/ou un indice de fluidité à chaud (MFR) dans la gamme de 0,5-5,0 g/10 min ou dans la gamme de 0,5-5,0 g/10 min. 5-5,0 g/10 min ou 0,8-2,0 g/10 min, de préférence dans la gamme de 1,0-1,5 g/10 min à 230°C et 2,16 kg tel que mesuré selon ASTMD 1238.

6. Composition de moulage selon l'une quelconque des revendications précédentes, **caractérisée en ce que** la fraction du composant (C) dans la composition de moulage totale est dans la gamme de 5-22% en poids, de préférence dans la gamme de 7-18% en poids ou dans la gamme de 8 15 % en poids.

7. Composition de moulage selon l'une quelconque des revendications précédentes, **caractérisée en ce que** le polyamide du composant (C) est choisi dans le groupe constitué par : PA6, PA66, PA6/66, PA610, PA612, PA614, PA616, où le polyamide du composant (C) est de préférence choisi dans le groupe constitué par : PA6, PA66, PA6/66, et où de manière particulièrement préférée le composant (C) est formé exclusivement de PA6 ;
et/ou **en ce que** le polyamide du composant (C) a une viscosité relative de 3,4-4.2 (ISO 307 (2013), acide sulfurique, 1,0 % en poids, 20°C), de préférence dans la gamme de 3,6-4,0 ;
et/ou **en ce que** le polyamide du composant (C) comprend du PA6 ou consiste exclusivement en PA6, où ce PA6 a une viscosité relative de 3,4-4,2 (ISO 307 (2013), acide sulfurique, 1,0 % en poids, 20°C), de préférence dans la gamme de 3,5-4,1.

8. Composition de moulage selon l'une quelconque des revendications précédentes, **caractérisée en ce que** la fraction du composant (D) dans la composition de moulage totale est comprise entre 0,2 et 2,0 % en poids, de préférence entre 0,3 et 2,0 % en poids et notamment entre 0,3 et 1 ,5 % en poids.

9. Composition de moulage selon l'une quelconque des revendications précédentes, **caractérisée en ce que** les stabilisants thermiques du composant (D) comprennent des systèmes ou consistent en des systèmes choisis dans le groupe constitué par :
l'iodure de cuivre(I), l'iodure de potassium, des stabilisants organiques, ou un mélange de ceux-ci, où de préférence les stabilisants organiques sont choisis dans le groupe constitué par : phénols, de préférence sous forme de tétrakis(3-(3,5-di-tert-butyl-4-hydroxyphényl)propionate de pentaérythritol), de tétrakisméthylène(3,5-di-t-butyl-4-hydroxyhydrocinnamato)méthane ou d'un mélange de ces systèmes ;
et/ou **en ce que** les stabilisateurs thermiques du composant (D) comprennent ou sont exclusivement formés d'un mélange d'iodure de cuivre (I), d'iodure de potassium, la fraction d'iodure de cuivre (I) étant de préférence comprise entre 0,02 et 0,1 % en poids et la fraction d'iodure de potassium étant comprise entre 0,2 et 0,6 % en poids, respectivement par rapport à la masse de moulage totale ;
et/ou **en ce que** les stabilisateurs thermiques du composant (D) comprennent ou sont exclusivement formés par un mélange de pentaérythritol tétrakis(3-(3,5-di-tert-butyl-4-hydroxyphényl)propionate) et de tétrakisméthylène(3,5-di-t-butyl-4-hydroxy-hydrocinnamato)méthane, de préférence dans un rapport pondéral de 1:1-3:1, de préférence dans la gamme de 2:1-8:3 ou dans la gamme de 7:3 ;
et/ou **en ce que** les stabilisateurs de chaleur du composant (D) comprennent des systèmes ou consistent en des systèmes choisis dans le groupe constitué par : l'iodure de cuivre(I), l'iodure de potassium, l'acétate de lanthane, l'hydroxyde de lanthane, l'oxyde de lanthane, l'acétate de cérium, le tétrahydroxyde de cérium, l'oxyde de cérium, ou leurs mélanges.

10. Composition de moulage selon l'une quelconque des revendications précédentes, **caractérisée en ce que** la fraction du composant (E) dans la composition de moulage totale est comprise entre 0 et 4,0 % en poids, de préférence entre 0,1 et 3,0 % en poids ou entre 0,2 et 2,5 % en poids ;
et/ou **en ce que** les additifs du composant (E) comprennent des systèmes choisis dans le groupe suivant ou consistent en ces systèmes : des accélérateurs ou des retardateurs de cristallisation, des agents d'écoulement, des lubrifiants, des agents de démoulage, des pigments, des substances colorantes et de marquage, des auxiliaires de traitement, des antistatiques, du noir de carbone, du graphite, des nanotubes de carbone, des résidus de processus de polymérisation tels que des catalyseurs, des sels et des dérivés de ceux-ci, des antioxydants, des antiozonants, des stabilisateurs de lumière, des stabilisateurs UV. des absorbeurs ou des bloqueurs UV, des absorbeurs IR, des absorbeurs NIR, des agents antiblocage, des agents de nucléation, des agents de transfert de chaîne, des agents antimousse, des additifs d'allongement de chaîne, des additifs de conductivité, des agents de démoulage, des pigments organiques, du noir de carbone, du graphite, du graphène, des agents photochromiques, des agents de démoulage, des azurants optiques, ainsi que des mélanges et des combinaisons de ceux-ci, où de préférence les additifs du composant (E) comprennent des systèmes choisis dans le groupe suivant ou consistent en ces systèmes : des agents de démoulage, des stabilisateurs de lumière, des pigments, des colorants, des agents d'allongement de chaîne, de préférence sous forme de polyoléfines modifiées par l'acide acrylique avec un degré de greffage supérieur à 4 % en poids et/ou une combinaison d'un polycarbonate avec un polyamide à terminaison acide, où les polyoléfines modifiées chimiquement sont particulièrement choisies comme polyéthylène greffé par l'acide acrylique, de préférence avec un degré de greffage dans la plage de 5 à 7 % en poids, par rapport au polyéthylène greffé, où le polyéthylène est de préférence un PEHD.

11. Composition de moulage selon l'une quelconque des revendications précédentes, **caractérisée en ce que** la somme de (B) et (C) est comprise entre 32 et 45% en poids, de préférence entre 35 et 42% en poids et tout particulièrement entre 36 et 41% en poids.

12. Composition de moulage selon l'une quelconque des revendications précédentes, **caractérisée en ce que** la composition à mouler présente une résistance à l'état fondu comprise entre 30 et 70 secondes, de préférence entre 35 et 60 secondes ou entre 40 et 55 secondes ;
et/ou **en ce que** la masse de moulage présente un module d'élasticité en traction d'au plus 800 MPa (ISO 527 (2012), état sec), de préférence dans la gamme de 100-700 MPa, de manière particulièrement préférée dans la gamme de 200-600 MPa;
et/ou **en ce que** la composition de moulage ne présente aucune délamination lors d'une sollicitation dynamique-mécanique après au moins 1,3 million de cycles avec une charge alternée de compression et de traction à 150°C.

13. Procédé de fabrication d'une composition de moulage selon l'une quelconque des revendications précédentes, **caractérisé en ce que** les composants (A)-(E) à l'unisson sous forme éventuellement fondue sont dosés dans un appareil de mélange, de préférence sous la forme d'un appareil d'extrusion ayant de préférence deux ou plusieurs vis.

14. Utilisation d'une composition de moulage selon l'une quelconque des revendications précédentes dans un procédé de moulage par injection, un procédé d'extrusion ou un procédé de coextrusion, de préférence dans un procédé de moulage par soufflage, de préférence un procédé de moulage par extrusion-soufflage ou un procédé de moulage par étirage-soufflage, y compris le moulage par soufflage 3D, le moulage par soufflage par coextrusion, le moulage par soufflage 3D par coextrusion, la coextrusion séquentielle, le moulage par soufflage par aspiration par coextrusion et le moulage par soufflage séquentiel, dans lequel, de préférence, une préforme produite par moulage par injection classique dans une opération précédente est chauffée dans une première étape du procédé, de préférence avec un émetteur infrarouge, et, après le chauffage de la préforme, celle-ci est introduite dans un moule ou des éléments chauffants sont sortis du moule et la fermeture du moule produit, le cas échéant, un étirement longitudinal sur le goulot d'étranglement, maintenant ainsi la préforme axialement, et ensuite un gaz est introduit dans la préforme et se dilate sous la contrainte de compression et produit ainsi le contour du moule.

15. Pièce moulée réalisée à partir d'une composition de moulage selon l'une quelconque des revendications précédentes, de préférence sous la forme d'un tube ou d'un récipient, de manière particulièrement préférée sous la forme d'un corps creux ou d'une ligne, de préférence pour une utilisation dans le secteur automobile, notamment des tubes ou des récipients tels que des tuyaux d'air de suralimentation pour un véhicule automobile, des lignes monocouches ou multicouches porteuses de fluide, qui peuvent être lisses ou ondulées, telles que des conduites de carburant, des conduites hydrauliques, des conduites de frein, des conduites d'embrayage ou des conduites de liquide de refroidissement, des réservoirs de liquide de frein ou des réservoirs de carburant, la pièce moulée pouvant comporter en outre d'autres couches en d'autres matières thermoplastiques, l'une de ces autres couches étant de préférence constituée d'un système choisi dans le groupe suivant : PA 612, PA 610, PA 11, PA 12, PA 1010, PA 1012, PA 616, PA 6, PA 66, PA 10T/612, PA 9T/MT (M = 2-méthyloctane-1,8-diamine), PA 46, ou leurs mélanges.
